# FASCICULE DE BREVET EUROPEEN

(11) **EP 2 870 761 B1**
(45) Date de publication et mention de la délivrance du brevet: **05.09.2018**
(21) Numéro de dépôt: 13744716.5
(22) Date de dépôt: 08.07.2013
(51) Int. Cl.: H04N 19/119, H04N 19/159, H04N 19/176, H04N 19/192, H04N 19/463, H04N 19/50

(54) **PROCÉDÉ DE CODAGE VIDEO PAR PREDICTION DU PARTITIONNEMENT D'UN BLOC COURANT, PROCÉDÉ DE DÉCODAGE, DISPOSITIFS DE CODAGE ET DE DÉCODAGE ET PROGRAMMES D'ORDINATEUR CORRESPONDANTS**
VERFAHREN ZUR VIDEOCODIERUNG DURCH VORHERSAGE DER AUFTEILUNG EINES AKTUELLEN BLOCKS, DECODIERUNGSVERFAHREN , CODIERUNGS- UND DECODIERUNGSVORRICHTUNGEN UND COMPUTERPROGRAMME DAFÜR
METHOD OF VIDEO CODING BY PREDICTION OF THE PARTITIONING OF A CURRENT BLOCK, METHOD OF DECODING, CODING AND DECODING DEVICES AND COMPUTER PROGRAMS CORRESPONDING THERETO

(30) Priorité: 09.07.2012 FR 1256604
(43) Date de publication de la demande: 13.05.2015
(73) Titulaire: Orange, 75015 Paris (FR)
(72) Inventeur: JUNG, Joël, F-78320 Le Mesnil Saint Denis (FR); VISWANATHAN, Kartik, 35000 Rennes (FR)
(86) Numéro de dépôt international: PCT/FR2013/051625
(87) Numéro de publication internationale: WO 2014/009644

(56) Documents cités:
- WO-A1-2011/061089
- WO-A1-2011/127966
- WO-A2-2011/046607
- US-A- 5 351 095
- US-B1- 7 499 492
- CHIA-YUAN TENG ET AL: "A new quadtree predictive image coder", PROCEEDINGS OF THE INTERNATIONAL CONFERENCE ON IMAGE PROCESSING. (ICIP). WASHINGTON, OCT. 23 - 26, 1995; [PROCEEDINGS OF THE INTERNATIONAL CONFERENCE ON IMAGE PROCESSING. (ICIP)], LOS ALAMITOS, IEEE COMP. SOC. PRESS, US, vol. 2, 23 octobre 1995 (1995-10-23), pages 73-76, XP010196975, DOI: 10.1109/ICIP.1995.537418 ISBN: 978-0-7803-3122-8
- MERKLE P ET AL: "The effects of multiview depth video compression on multiview rendering", SIGNAL PROCESSING. IMAGE COMMUNICATION, ELSEVIER SCIENCE PUBLISHERS, AMSTERDAM, NL, vol. 24, no. 1-2, 1 janvier 2009 (2009-01-01), pages 73-88, XP025884346, ISSN: 0923-5965, DOI: 10.1016/J.IMAGE.2008.10.010 [extrait le 2008-11-05]

## Description

### Domaine de l'invention

La présente invention se rapporte de manière générale au domaine du traitement d'images, et plus précisément au codage d'images numériques et de séquences d'images numériques.

L'invention peut ainsi notamment s'appliquer au codage vidéo mis en oeuvre dans les codeurs vidéo actuels, à venir (ITU-T/ISO MPEG HEVC) et leurs extensions.

### Arrière-plan de l'invention

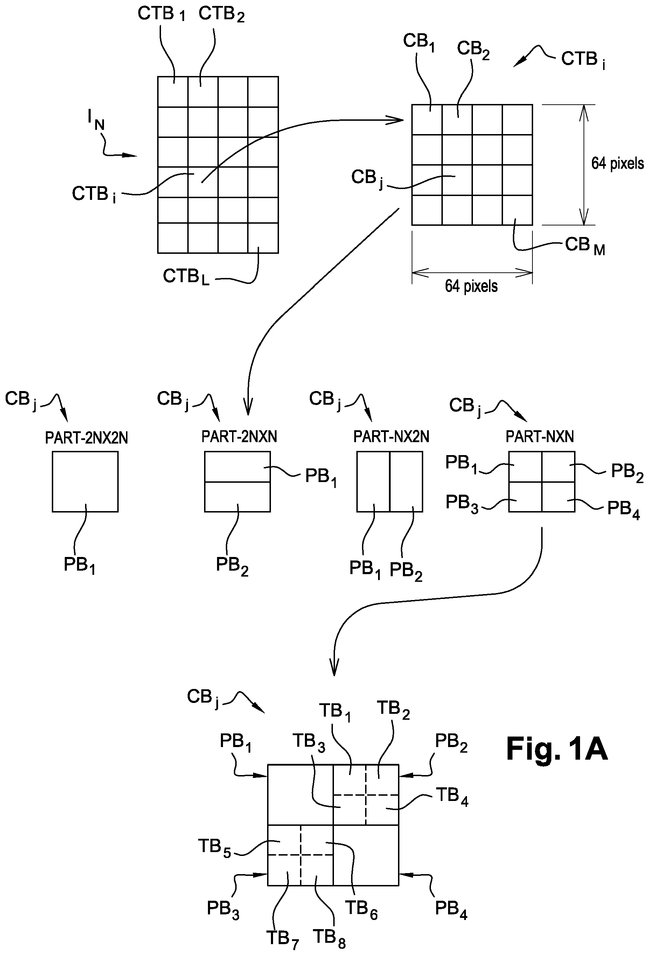

La norme HEVC actuellement en cours d'élaboration et décrite dans le document « B. Bross, W.-J. Han, J.-R. Ohm, G. J. Sullivan, and T. Wiegand, "High efficiency video coding (HEVC) text spécification draft 6," document JCTVC-H1003 of JCT-VC, San Jose CA, USA, February 2012» est similaire à la norme précédente H.264, en ce sens qu'elle utilise un partitionnement par blocs de la séquence vidéo. La norme HEVC se distingue toutefois de la norme H.264 par le fait que le partitionnement mis en oeuvre respecte une structure arborescente appelée « quadtree ». A cet effet, comme représenté sur la **figure 1A**, une image courante I_{N} est partitionnée une première fois en une pluralité de blocs carrés CTB₁, CTB₂, ..., CTBᵢ,..., CTB_{L}, par exemple de taille 64x64 pixels (1≤i≤L). Pour un bloc CTBᵢ donné, il est considéré que ce bloc constitue la racine d'un arbre de codage dans lequel :
- un premier niveau de feuilles sous la racine correspond à un premier niveau de profondeur de partitionnement du bloc CTBᵢ pour lequel le bloc CTBᵢ a été partitionné une première fois en une pluralité de blocs de codage,
- un deuxième niveau de feuilles sous le premier niveau de feuilles correspond à un deuxième niveau de profondeur de partitionnement de bloc CTBᵢ pour lequel le bloc CTBᵢ partitionné une première fois est partitionné une deuxième fois en une pluralité de blocs de codage,...
- ... un kième niveau de feuilles sous le k-1 ième niveau de feuilles qui correspond à un kième niveau de profondeur de partitionnement de bloc CTBᵢ pour lequel le bloc CTBᵢ partitionné k-1 fois est partitionné une dernière fois en une pluralité de blocs de codage.

Dans un codeur compatible HEVC, l'itération du partitionnement du bloc CTBᵢ est effectuée jusqu'à un niveau de profondeur de partitionnement prédéterminé.

A l'issue des partitionnements successifs précités du bloc CTBᵢ, comme représenté à la **figure 1A****,** ce dernier est partitionné au final en une pluralité de blocs de codage notés CB₁, CB₂,..., CBⱼ,..., CB_{M} avec 1≤j≤M.

La taille desdits blocs de codage peut être choisie de façon adaptative à l'aide d'un partitionnement de blocs respectant une arborescence de type « quadtree », dans laquelle les feuilles de cette dernière représentent respectivement les blocs de codage CB₁, CB₂,..., CBⱼ,..., CB_{M} obtenus sur différents niveaux de profondeur de partitionnement.

En référence à la **figure 1A****,** pour un bloc CBⱼ donné, il est considéré que ce bloc constitue la racine d'un arbre de prédiction et de transformation dudit bloc, par exemple de type transformée en cosinus discrète (DCT). L'arbre de prédiction d'un bloc CBⱼ donné est représentatif de la manière dont est partitionné le bloc CBⱼ en une pluralité de blocs PB₁, PB₂,..., PBₜ,..., PB_{P}, (1≤t≤P) lesquels sont appelés blocs de prédiction. Pour un bloc de prédiction considéré PBₜ, des paramètres de prédiction, tels que par exemple le mode de codage, les vecteurs de mouvement, etc sont spécifiés dans une unité de prédiction (en anglais « prediction unit »).

Il existe différents modes de partitionnement d'un bloc de codage CBⱼ considéré. La **figure 1A** représente par exemple les différents modes de partitionnement du bloc de codage CBⱼ considéré, dans le cas d'une prédiction INTER de ce dernier. Lesdits modes de partitionnement sont au nombre de quatre :
- le mode PART_2Nx2N correspond à l'absence de partitionnement du bloc de codage CBⱼ considéré qui correspond ainsi à un unique bloc de prédiction PB₁,
- le mode PART_2NxN correspond à un partitionnement horizontal du bloc de codage CBⱼ considéré en deux blocs de prédiction rectangulaires PB₁ et PB₂,
- le mode PART_Nx2N correspond à un partitionnement vertical du bloc de codage CBⱼ considéré en deux blocs de prédiction rectangulaires PB₁ et PB₂,
- le mode PART_NxN correspond à un partitionnement du bloc de codage CBⱼ considéré en quatre blocs de prédiction carrés PB₁, PB₂, PB₃, PB₄ qui ont tous la même taille.

Après codage prédictif du bloc de codage CBⱼ considéré, ce dernier peut être à nouveau partitionné en une pluralité de blocs plus petits TB₁, TB₂,..., TBᵥ,..., TB_{Q} (1≤v≤Q) qui sont appelés blocs de transformée. Un tel partitionnement respecte une arborescence de type « quadtree », appelée « residual quadtree », dans laquelle les feuilles de cette dernière représentent respectivement les blocs de codage TB₁, TB₂,..., TBᵥ,..., TB_{Q} obtenus sur différents niveaux de profondeur de partitionnement.
La **figure 1A** représente un exemple de partitionnement du bloc de codage CBⱼ qui a été prédit à l'aide du partitionnement PART_NxN. Dans l'exemple représenté, les blocs PB₂ et PB₃ du bloc de codage CBⱼ sont par exemple chacun partitionnés en quatre blocs carrés plus petits et tous de la même taille, respectivement TB₁, TB₂, TB₃, TB₄ et TB₅, TB₆, TB₇, TB₈. Un tel partitionnement est représenté en pointillé sur la **figure 1A**.

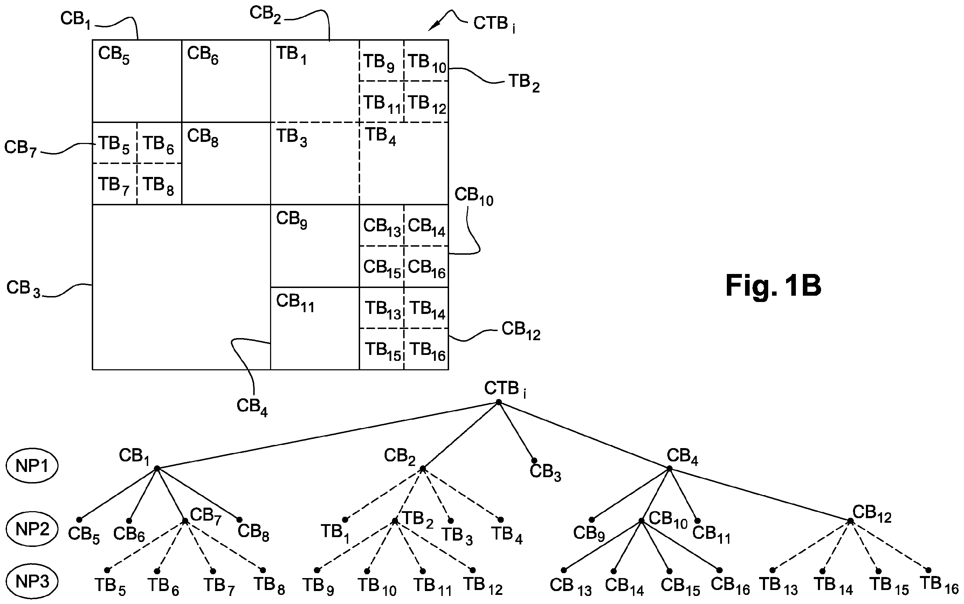

La **figure 1B** représente un exemple de partitionnement d'un bloc CTBᵢ considéré qui a été obtenu après codage prédictif et codage par transformée de ce dernier, ainsi que l'arborescence de partitionnement correspondante. Dans l'exemple représenté :
   - le bloc CTBᵢ, considéré comme la racine de l'arbre de codage, est représenté en trait continu gras,
   - les blocs de codage CB₁ à CB₁₆ qui constituent d'une part les feuilles de l'arbre de codage, et d'autre part les racines de l'arbre « residual quadtree » sont représentés en trait continu fin,
   - les blocs de transformée TB₁ à TB₁₆ qui constituent les feuilles de l'arbre « residual quadtree » sont représentés en trait pointillé.

Dans la structure arborescente ainsi constituée, il existe :
- un premier niveau de profondeur de partitionnement NP1 qui contient uniquement des blocs de codage, tels que les blocs CB₁ à CB₄,
- un deuxième niveau de profondeur de partitionnement NP2 qui contient :
   ▪des blocs de codage, tels que les blocs CB₅ à CB₈ obtenus à l'issue du partitionnement du bloc CB₁, ainsi que les blocs CB₉ à CB₁₂ obtenus à l'issue du partitionnement du bloc CB₄,
   ▪des blocs de transformée, tels que les blocs TB₁ à TB₄ obtenus à l'issue du partitionnement du bloc CB₂,
- un troisième niveau de profondeur de partitionnement NP3 qui contient :
   ▪ des blocs de codage, tels que les blocs CB₁₃ à CB₁₆ obtenus à l'issue du partitionnement du bloc CB₁₀,
   ▪ des blocs de transformée, tels que les blocs TB₅ à TB₈ obtenus à l'issue du partitionnement du bloc CB₇, les blocs TB₉ à TB₁₂ obtenus à l'issue du partitionnement du bloc TB₂, les blocs TB₁₂ à TB₁₆ obtenus à l'issue du partitionnement du bloc CB₁₂.

Dans un codeur compatible HEVC, pour un bloc CTBᵢ considéré, plusieurs partitionnements différents de ce dernier sont mis en compétition au codeur, c'est-à-dire respectivement différentes combinaisons d'itérations de partitionnement, dans le but de sélectionner le meilleur partitionnement, c'est-à-dire celui qui optimisera le codage du bloc CTBᵢ considéré selon un critère de performance de codage prédéterminé, par exemple le coût débit/distorsion ou bien un compromis efficacité/complexité, qui sont des critères bien connus de l'homme du métier.

Une fois réalisé le partitionnement optimal d'un bloc CTBᵢ considéré, une séquence d'informations numériques, telle que par exemple une suite de bits, représentative de ce partitionnement optimal, est transmise dans un flux destiné à être lu par un décodeur vidéo.

Un tel flux comprend également:
- des données résiduelles qui sont les coefficients du bloc résiduel quantifié et éventuellement, lors d'un codage en mode Inter, des données résiduelles des vecteurs mouvement,
- des paramètres de codage qui sont représentatifs du mode de codage utilisé, en particulier:
   ▪ le mode de prédiction (prédiction intra, prédiction inter, prédiction par défaut réalisant une prédiction pour laquelle aucune information n'est transmise au décodeur (« en anglais « skip »)) ;
   ▪ des informations précisant le type de prédiction (orientation, composante d'image de référence, ...) ;
   ▪ le type de transformée, par exemple DCT 4x4, DCT 8x8, etc...
   ▪ les informations de mouvement si nécessaire ;
   ▪ etc.

Dans certains cas, il arrive que le partitionnement en une pluralité de sous-blocs d'un bloc déjà codé puis décodé ressemble au partitionnement du bloc considéré CTBᵢ à coder. Il en résulte que la séquence d'informations numériques représentative du partitionnement du bloc CTBᵢ à coder ressemble également à la séquence d'informations numériques représentative du partitionnement du bloc déjà codé puis décodé. Or, la séquence d'informations numériques représentative du partitionnement du bloc CTBᵢ à coder contient un nombre non négligeable d'informations numériques dont le coût de signalisation est élevé, ce qui réduit les performances de codage.
Un document reflétant l'état de la technique antérieure est: WO 2011/127966 A1 (FRAUNHOFER GES FORSCHUNG [DE]; KIRCHHOFFER HEINER [DE]; WINKEN MARTIN) 20 octobre 2011 (2011-10-20).

### Objet et résumé de l'invention

L'invention est définie par les revendications.

Un des buts de l'invention est de remédier à des inconvénients de l'état de la technique précité.

A cet effet, un objet de la présente invention concerne un procédé de codage d'une image courante partitionnée préalablement en blocs, mettant en oeuvre, pour un bloc courant à coder, les étapes consistant à :
- partitionner au moins une fois le bloc courant en plusieurs sous-blocs,
- représenter le partitionnement du bloc courant sous la forme d'une première séquence d'informations numériques.

Un tel procédé de codage est remarquable en ce qu'il comprend les étapes consistant à:
- prédire le partitionnement du bloc courant par rapport au partitionnement d'un bloc déjà codé puis décodé et représenté sous la forme d'une deuxième séquence d'informations numériques, par comparaison des première et deuxième séquences entre elles ou bien des partitionnements correspondants entre eux, puis par détermination d'informations numériques résiduelles représentatives de la comparaison précitée, selon un critère de comparaison prédéterminé,
- encoder les informations numériques résiduelles déterminées.

Une telle disposition permet ainsi d'encoder seulement la différence entre le partitionnement du bloc courant et le partitionnement de référence, c'est-à-dire le partitionnement du bloc déjà codé puis décodé, ce qui réduit sensiblement le nombre d'informations numériques qui seront utiles, au décodage, à la reconstruction du partitionnement du bloc courant.

Selon un mode de réalisation particulier, le procédé de codage comprend une étape consistant à transmettre à un décodeur un signal de données comprenant une information numérique indiquant si l'étape de prédiction du partitionnement a été mise en oeuvre ou pas.

Une telle disposition permet à n'importe quels codeurs actuels ou futurs d'avoir la possibilité d'activer ou de désactiver la prédiction du partitionnement du bloc courant, pour une séquence d'images considérée, pour une image considérée ou encore pour une portion d'image (« slice » en anglais) considérée. Il en résulte qu'un tel procédé de prédiction de partitionnement est particulièrement flexible, car adaptable au contexte vidéo courant.

Selon un autre mode de réalisation particulier, lorsque l'étape de prédiction de partitionnement précitée est mise en oeuvre, le signal de données comprend les informations numériques résiduelles encodées telles que mentionnées ci-dessus.

Une telle disposition permet de signaler au décodeur, en vue de la reconstruction du bloc courant, le résultat de la différence entre le partitionnement du bloc courant et le partitionnement de référence.

Selon encore un autre mode de réalisation particulier dans lequel le bloc courant et le bloc déjà codé puis décodé ont été partitionnés au moins une fois respectivement jusqu'à l'obtention de deux niveaux de profondeur de partitionnement qui sont inférieurs ou égaux à un niveau prédéterminé de profondeur de partitionnement, le critère de comparaison prédéterminé est le suivant :
- comparer le partitionnement du bloc courant et du bloc déjà codé puis décodé à niveau égal de profondeur de partitionnement,
- itérer la comparaison jusqu'au niveau prédéterminé de profondeur de partitionnement,
- à l'issue de chaque comparaison, déterminer soit une information numérique résiduelle d'une première valeur, soit une information numérique résiduelle d'une deuxième valeur si les partitionnements comparés sont respectivement soit les mêmes, soit différents.

Une telle disposition permet de réduire le coût de signalisation lorsque :
- au moins un des partitionnements du bloc courant ou du bloc déjà codé puis décodé a été effectué selon un niveau de profondeur de partitionnement élevé,
- le niveau de profondeur de partitionnement du bloc courant est très différent du niveau de profondeur de partitionnement du bloc déjà codé, puis décodé.

Selon encore un autre mode de réalisation particulier, le critère de comparaison est le suivant :
▪ aucune information numérique résiduelle n'est déterminée si un sous-bloc issu du partitionnement du bloc courant et un sous-bloc correspondant issu du partitionnement du bloc déjà codé puis décodé n'ont pas été partitionnés à nouveau,
▪ une information numérique résiduelle est déterminée si un sous-bloc issu du partitionnement du bloc courant a été partitionné à nouveau et si un sous-bloc correspondant issu du partitionnement du bloc déjà codé puis décodé a été partitionné à nouveau ou non.

En variante, le critère de comparaison est le suivant :
▪ aucune information numérique résiduelle n'est déterminée si un sous-bloc issu du partitionnement du bloc courant et un sous-bloc correspondant issu du partitionnement du bloc déjà codé puis décodé ont été partitionnés à nouveau,
▪ une information numérique résiduelle est déterminée si un sous-bloc issu du partitionnement du bloc courant et un sous-bloc correspondant issu du partitionnement du bloc déjà codé puis décodé n'ont pas été partitionnés à nouveau,
▪ une information numérique résiduelle est déterminée si un sous-bloc issu du partitionnement du bloc courant a été partitionné à nouveau et si un sous-bloc correspondant issu du partitionnement du bloc codé puis décodé n'a pas été partitionné à nouveau.

Selon encore un autre mode de réalisation particulier, le bloc codé puis décodé a une position pré-identifiée :
- dans une partie décodée de l'image courante, ou bien
- dans une autre image déjà décodée, ou bien
- dans une composante d'image associée à une autre composante d'image dans laquelle est situé le bloc courant.

Une telle disposition permet ainsi de mettre en oeuvre l'invention dans le cadre du codage d'une image ou d'une partie d'image en deux dimensions utilisant aussi bien un mode de prédiction Intra qu'un mode de prédiction Inter.

Dans le cas d'un codage Inter, l'autre image déjà décodée peut être une image antérieure ou postérieure à l'image courante.

Une telle disposition permet ainsi de mettre en oeuvre l'invention dans le cadre du codage d'une image en deux dimensions utilisant aussi bien un schéma uni-prédictif que bi-prédictif.

Enfin, une telle disposition permet de mettre en oeuvre l'invention dans le cas d'un codage vidéo en trois dimensions (3D), tel que par exemple le codage 3D multi-vues, le codage HEVC 3D, où il est proposé de coder une première composante d'image par rapport à au moins une deuxième composante d'image déjà codée puis décodée.

Il convient de noter que les première et deuxième composantes d'image ne sont pas des morceaux d'image mais représentent au sens de l'invention deux vues différentes d'une image complète.

De telles première et deuxième composantes d'image sont par exemple respectivement une composante de texture et sa composante de profondeur associée, telles que mises en oeuvre dans le nouveau format de codage vidéo, appelé MVD (pour « Multiview Video + Depth » en anglais) qui fait l'objet de développements actuels.

Alternativement, les première et deuxième composantes d'image précitées pourraient être respectivement une composante de profondeur et sa composante de texture associée.

D'autres types de première et deuxième composantes d'image peuvent bien sûr être envisagés.

Ainsi, les première et deuxième composantes d'image peuvent être respectivement :
- deux vues d'une même image multi-vues, ou bien
- une composante luma et une composante chroma, ou bien
- deux couches différentes lors d'un codage vidéo scalable.

Il est également possible d'envisager le codage d'une première composante d'image par rapport à une deuxième composante d'image et à une troisième composante d'image. Dans ce cas par exemple :
- la première composante d'image peut être une composante Y,
- la deuxième composante d'image peut être une composante U,
- la troisième composante d'image peut être une composante V.

L'invention concerne également un dispositif de codage d'une image courante découpée préalablement en blocs, destiné à mettre en oeuvre le procédé de codage précité. Un tel dispositif comprend, pour un bloc courant à coder,
- des moyens de partitionnement pour partitionner au moins une fois le bloc courant en plusieurs sous-blocs,
- des moyens de représentation du partitionnement du bloc courant sous la forme d'une première séquence d'informations numériques.

Un tel dispositif de codage est remarquable en ce qu'il comprend :
- des moyens de prédiction du partitionnement du bloc courant par rapport au partitionnement d'un bloc déjà codé puis décodé et représenté sous la forme d'une deuxième séquence d'informations numériques, les moyens de prédiction étant aptes à comparer des première et deuxième séquences entre elles ou bien des partitionnements correspondants entre eux, puis à déterminer des informations numériques résiduelles représentatives de la comparaison, selon un critère de comparaison prédéterminé,
- des moyens d'encodage des informations numériques résiduelles déterminées.

L'invention concerne également un signal de données représentatif d'une image codée selon le procédé de codage précité. Un tel signal est remarquable en ce qu'il porte les informations numériques résiduelles encodées, telles que mentionnées ci-dessus.

L'invention concerne également un procédé de décodage d'un signal de données représentatif d'une image courante préalablement partitionnée en blocs et qui a été codée, mettant en oeuvre, pour un bloc courant à décoder, une étape consistant à reconstruire préalablement le partitionnement d'un bloc décodé.

Un tel procédé de décodage est remarquable en ce qu'il comprend les étapes consistant à :
- identifier, dans ledit signal de données, des informations numériques résiduelles représentatives d'une comparaison effectuée au codage entre une première séquence d'informations numériques représentant le partitionnement d'un bloc courant et une deuxième séquence d'informations numériques représentant le partitionnement précité d'un bloc décodé, ou bien entre les partitionnements correspondants entre eux, selon un critère de comparaison prédéterminé,
- reconstruire le partitionnement du bloc courant à partir du partitionnement reconstruit du bloc décodé et des informations numériques résiduelles identifiées.

Une telle technique de décodage permet, à réception et lecture des informations de codage, et plus particulièrement des informations numériques résiduelles représentatives de la différence entre le partitionnement du bloc courant et le partitionnement de référence, de reconstruire le bloc courant en appliquant une prédiction inverse de celle réalisée conformément au procédé de codage précité.

L'invention concerne également un dispositif de décodage destiné à mettre en oeuvre le procédé de décodage précité, ledit dispositif de décodage étant adapté au décodage d'un signal de données représentatif d'une image courante préalablement partitionnée en blocs et qui a été codée, et comprenant, pour un bloc courant à décoder, des moyens de reconstruction aptes à reconstruire préalablement le partitionnement d'un bloc décodé.

Un tel dispositif de décodage est remarquable en ce qu'il comprend :
- des moyens d'identification, dans le signal de données, d'informations numériques résiduelles représentatives d'une comparaison effectuée au codage entre une première séquence d'informations numériques représentant le partitionnement d'un bloc courant et une deuxième séquence d'informations numériques représentant le partitionnement d'un bloc décodé, ou bien entre les partitionnements correspondants entre eux, selon un critère de comparaison prédéterminé,
- les moyens de reconstruction précités étant aptes à reconstruire le partitionnement du bloc courant à partir du partitionnement reconstruit du bloc décodé et des informations numériques résiduelles identifiées.

L'invention concerne encore un programme d'ordinateur comportant des instructions pour mettre en oeuvre le procédé de codage ou le procédé de décodage selon l'invention, lorsqu'il est exécuté sur un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme d'ordinateur, ce programme comportant des instructions adaptées à la mise en oeuvre du procédé de codage ou de décodage selon l'invention, tels que décrits ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé de codage ou de décodage précité.

Le dispositif de codage et le programme d'ordinateur correspondant précités présentent au moins les mêmes avantages que ceux conférés par le procédé de codage selon la présente invention.

Le dispositif de décodage, le programme d'ordinateur et le support d'enregistrement correspondants précités présentent au moins les mêmes avantages que ceux conférés par le procédé de décodage selon la présente invention.

### Brève description des dessins

D'autres caractéristiques et avantages apparaîtront à la lecture de modes de réalisation préférés décrits en référence aux figures dans lesquelles:
- la figure 1A représente les opérations successives de partitionnement d'un bloc conformément à la technologie HEVC,
- la figure 1B représente un exemple de partitionnement d'un bloc de codage qui a été obtenu après prédiction et transformation de ce dernier, ainsi que l'arborescence de prédiction et de transformation correspondante,
- la figure 2 représente des étapes du procédé de codage selon l'invention,
- la figure 3 représente un mode de réalisation d'un dispositif de codage selon l'invention,
- la figure 4A représente un exemple de partitionnement d'un bloc courant à coder, ainsi que l'arborescence représentative du partitionnement effectué,
- la figure 4B représente un exemple de partitionnement d'un bloc déjà codé puis décodé, ainsi que l'arborescence représentative du partitionnement effectué,
- la figure 5 représente un signal de données obtenu par le procédé de codage selon l'invention,
- les figures 6A à 6C représentent respectivement plusieurs positions pré-identifiées possibles dans lesquelles peut se trouver le bloc codé puis décodé,
- la figure 7 représente des étapes du procédé de décodage selon l'invention,
- la figure 8 représente un mode de réalisation d'un dispositif de décodage selon l'invention.

### Description détaillée du procédé de codage de l'invention

Un mode de réalisation de l'invention va maintenant être décrit, dans lequel le procédé de codage selon l'invention est utilisé pour coder une image ou une séquence d'images selon un flux binaire proche de celui qu'on obtient par un codage conforme par exemple à la norme en cours d'élaboration HEVC 2D.

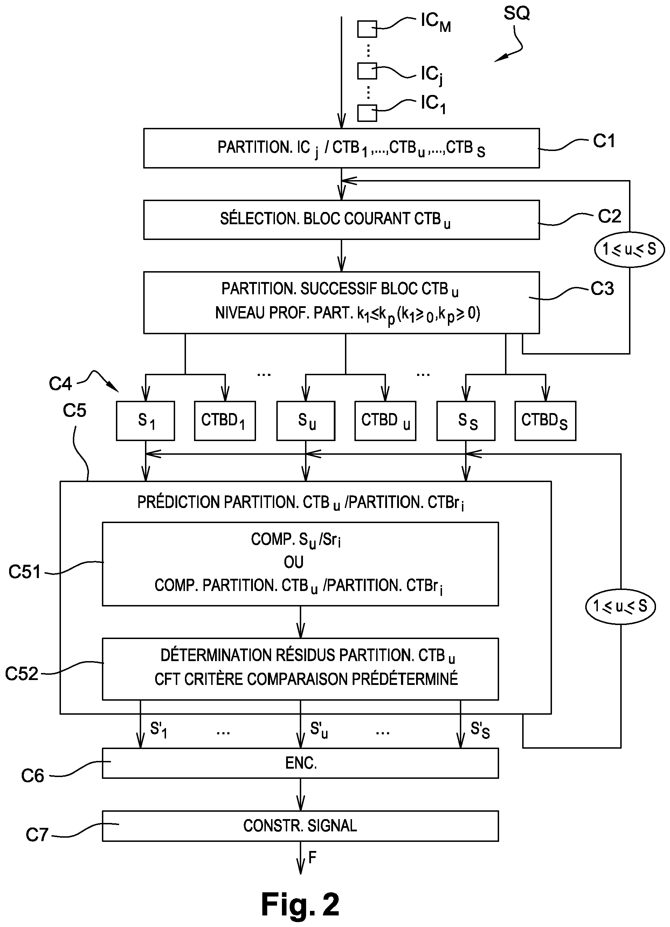

Dans ce mode de réalisation, le procédé de codage selon l'invention est par exemple implémenté de manière logicielle ou matérielle par modifications d'un codeur initialement conforme à la norme HEVC 2D. Le procédé de codage selon l'invention est représenté sous la forme d'un algorithme comportant des étapes C1 à C7 telles que représentées à la **figure 2****.**

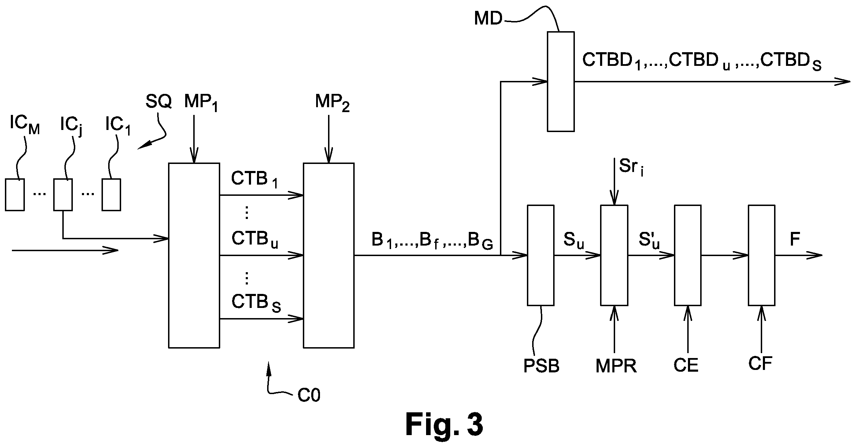

Selon le mode de réalisation de l'invention, le procédé de codage selon l'invention est implémenté dans un dispositif de codage CO représenté à la **figure 3****.**

Au cours d'une étape préalable C1 représentée à la **figure 2****,** il est procédé, de façon connue en soi, au partitionnement d'une image courante ICⱼ appartenant à une séquence SQ d'images IC₁, ..., ICⱼ,..., IC_{M}, en une pluralité de blocs CTB₁, CTB₂, ..., CTBᵤ,..., CTB_{S} par exemple de taille 64x64 pixels (1≤u≤S). Une telle étape de partitionnement est mise en oeuvre par un premier module logiciel de partitionnement MP1 représenté sur la **figure 3****.**

Il convient de noter qu'au sens de l'invention, le terme « bloc » signifie unité de codage (de l'anglais « coding unit »). Cette dernière terminologie est notamment utilisée dans la norme HEVC, par exemple dans le document « B. Bross, W.-J. Han, J.-R. Ohm, G. J. Sullivan, and T. Wiegand, "High efficiency video coding (HEVC) text spécification draft 6," document JCTVC-H1003 of JCT-VC, San Jose CA, USA, February 2012».

En particulier, une telle unité de codage regroupe des ensembles de pixels de forme rectangulaire ou carrée, encore appelés blocs, macroblocs, ou bien des ensembles de pixels présentant d'autres formes géométriques.

Au cours d'une étape C2 représentée à la **figure 2****,** un bloc CTBᵤ de l'image courante ICⱼ est sélectionné en tant que bloc courant à coder.

Au cours d'une étape C3 représentée à la **figure 2****,** le bloc CTBᵤ sélectionné est partitionné en une pluralité de sous-blocs de codage B₁, B₂,..., B_{f},..., B_{G} avec 1≤f≤G. Un tel partitionnement respecte une arborescence de type « quadtree », telle que décrite plus haut dans la description. D'autres types d'arborescence peuvent bien sûr être envisagés.

Conformément à l'invention, le partitionnement du bloc CTBᵤ est effectué au moins une fois jusqu'à l'obtention d'un niveau k₁ de profondeur de partitionnement qui est inférieur ou égal à un niveau k_{P} prédéterminé de profondeur de partitionnement (k₁≥0, k_{P}≥0).

Ledit partitionnement est mis en oeuvre par un deuxième module logiciel de partitionnement MP2 représenté sur la **figure 3****.**

Les étapes C2 à C3 sont réitérées pour l'ensemble des blocs CTB₁, CTB₂,..., CTB_{S}.

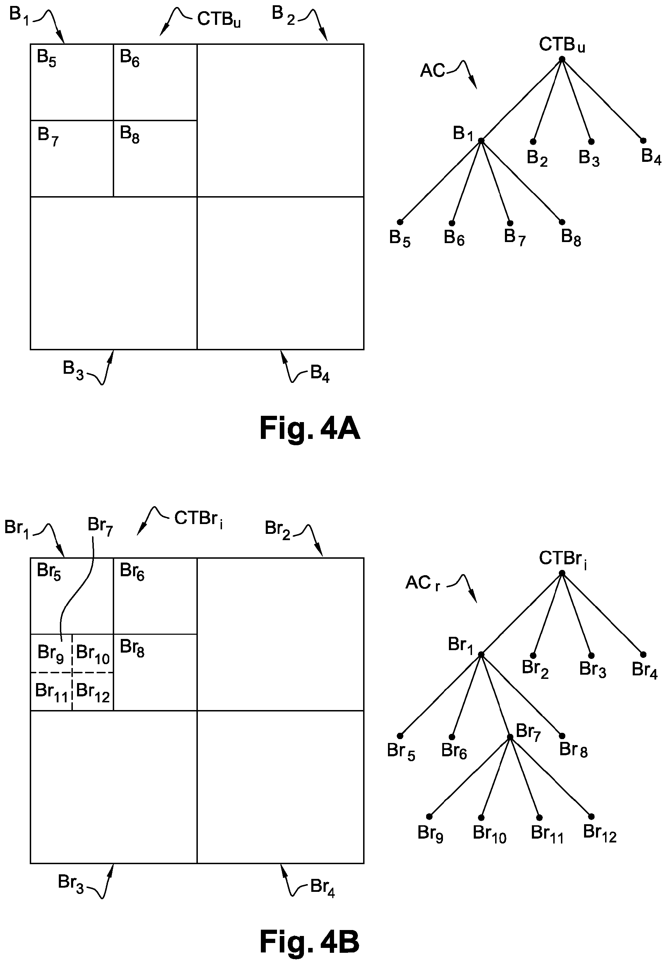

Un exemple de partitionnement du bloc CTBᵤ est représenté sur la **figure 4A****.**

Dans l'exemple représenté, le partitionnement du bloc courant CTBᵤ est effectué à un niveau de profondeur k₁=2 qui est fixé au codeur, ledit niveau étant inférieur à un niveau k_{P} prédéterminé de profondeur de partitionnement, tel que par exemple k_{P}=4. Dans l'exemple représenté, le niveau k₁ de profondeur de partitionnement est déterminé comme étant le niveau pour lequel le partitionnement final obtenu pour le bloc CTBᵤ sélectionné optimise par exemple un critère de performance de codage, en particulier le coût débit/distorsion.

En référence à la **figure 4A****,** pour le bloc CTBᵤ courant donné, il est considéré que ce bloc constitue la racine d'un arbre de codage AC dans lequel :
- un premier niveau de feuilles sous la racine correspond à un premier niveau de profondeur de partitionnement du bloc CTBᵤ pour lequel le bloc CTBᵤ a été partitionné une première fois en une pluralité de sous-blocs de codage, par exemple 4 sous-blocs de codage B₁, B₂, B₃, B₄,
- un deuxième niveau de feuilles sous le premier niveau de feuilles correspond à un deuxième niveau de profondeur de partitionnement de bloc CTBᵤ pour lequel le bloc CTBᵤ partitionné une première fois est partitionné une deuxième fois en une pluralité de sous-blocs de codage, par exemple 4 sous-blocs de codage B₅, B₆, B₇, B₈ issus du partitionnement du bloc B₁.

Au cours d'une étape C4 représentée à la **figure 2****,** il est procédé à la production de S séquences de bits S₁, S₂,..., Sᵤ,..., S_{S} qui sont représentatives respectivement des partitionnements effectués sur les blocs CTB₁, CTB₂, ..., CTBᵤ,..., CTB_{S}. Il est également procédé à la production d'une version décodée des blocs CTB₁, CTB₂, ..., CTBᵤ,..., CTB_{S}, qui sont notés CTBD₁, CTBD₂, ..., CTBDᵤ,..., CTBD_{S} sur les **figures 2** et **3****.** De tels blocs décodés sont destinés à être réutilisés par le codeur CO pour coder une image suivante de la séquence SQ.

Une telle étape de production de séquences binaires est mise en oeuvre par un module logiciel de traitement de données PSB représenté à la **figure 3****.**

L'étape de décodage précitée est quant à elle mise en oeuvre par le module de décodage MD représenté également sur la **figure 3****.**

Conformément à l'invention, au cours d'une étape C5 représentée sur la **figure 2****,** le partitionnement du bloc courant CTBᵤ est prédit par rapport au partitionnement d'un bloc déjà codé puis décodé qui est choisi parmi une pluralité de blocs candidats déjà codés puis décodés CTBr₁, CTBr₂, ..., CTBrᵢ,..., CTBr_{L} avec 1≤i≤L.

Une telle étape de prédiction C5 est mise en oeuvre dans un module logiciel de prédiction MPR représenté sur la **figure 3****.**

Le bloc déjà codé puis décodé qui est sélectionné est par exemple le bloc CTBrᵢ.

Le bloc CTBrᵢ choisi a été préalablement partitionné en une pluralité de sous-blocs de codage Br₁, Br₂,..., Br_{f},..., Br_{G} avec 1≤f≤G. Un tel partitionnement respecte une arborescence de type « quadtree », telle que décrite plus haut dans la description.

D'autres types d'arborescence peuvent bien sûr être envisagés.

Conformément à l'invention, le partitionnement du bloc CTBrᵢ est effectué au moins une fois jusqu'à l'obtention d'un niveau k₂ de profondeur de partitionnement qui est inférieur ou égal à un niveau k_{P} prédéterminé de profondeur de partitionnement (k₂≥0, k_{P}≥0).

Ledit partitionnement est mis en oeuvre par le deuxième module logiciel de partitionnement MP2 représenté sur la **figure 3****.**

Un exemple de partitionnement du bloc CTBrᵢ est représenté sur la **figure 4B****.**

Dans l'exemple représenté, le partitionnement du bloc courant CTBrᵢ est effectué à un niveau de profondeur k₂=3 fixé au codeur et qui est inférieur au niveau k_{P} prédéterminé de profondeur de partitionnement, tel que k_{P}=4. Le niveau k₂ de profondeur de partitionnement est déterminé comme étant le niveau pour lequel le partitionnement final obtenu pour le bloc CTBrᵢ sélectionné optimise par exemple un critère de performance de codage, en particulier le coût débit/distorsion.

En référence à la **figure 4B****,** pour un bloc CTBrᵢ donné, il est considéré que ce bloc constitue la racine d'un arbre de codage ACr dans lequel :
- un premier niveau de feuilles sous la racine correspond à un premier niveau de profondeur de partitionnement du bloc CTBrᵢ pour lequel le bloc CTBrᵢ a été partitionné une première fois en une pluralité de sous-blocs de codage, par exemple 4 sous-blocs de codage Br₁, Br₂, Br₃, Br₄,
- un deuxième niveau de feuilles sous le premier niveau de feuilles correspond à un deuxième niveau de profondeur de partitionnement de bloc CTBrᵢ pour lequel le bloc CTBrᵢ partitionné une première fois est partitionné une deuxième fois en une pluralité de sous-blocs de codage, par exemple 4 sous-blocs de codage Br₅, Br₆, Br₇, Br₈ issus du partitionnement du sous-bloc Br₁,
- un troisième niveau de feuilles sous le deuxième niveau de feuilles correspond à un troisième niveau de profondeur de partitionnement de bloc CTBrᵢ pour lequel le bloc CTBrᵢ partitionné une deuxième fois est partitionné une troisième fois en une pluralité de sous-blocs de codage, par exemple 4 sous-blocs de codage Br₉, Br₁₀, Br₁₁, Br₁₂ issus du partitionnement du sous-bloc Br₇.

Le partitionnement du bloc CTBrᵢ codé puis décodé est représenté sous la forme d'une séquence de bits Srᵢ.

La table ci-dessous représente un exemple d'un contenu de la séquence Srᵢ représentative du partitionnement du bloc CTBrᵢ codé puis décodé et d'un contenu de la séquence Sᵤ représentative du partitionnement du bloc CTBᵤ courant.

| | | | | | | | | | | | | | |
|---|---|---|---|---|---|---|---|---|---|---|---|---|---|
| Srᵢ | 1 | 1 | 0 | 0 | 1 | 0 | 0 | 0 | 0 | 0 | 0 | 0 | 0 |
| Sᵤ | 1 | 1 | 0 | 0 | 0 | 0 | | | | | 0 | 0 | 0 |

S'agissant de la séquence Srᵢ :
- le premier bit « 1 » indique un partitionnement du bloc CTBrᵢ en quatre sous-blocs plus petits Br₁, Br₂, Br₃, Br₄,
- le deuxième bit « 1 » indique un partitionnement du sous-bloc Br₁ en quatre sous-blocs plus petits Br₅, Br₆, Br₇, Br₈,
- le troisième bit « 0 » indique une absence de partitionnement du sous-bloc Br₅,
- le quatrième bit « 0 » indique une absence de partitionnement du sous-bloc Br₆,
- le cinquième bit « 1 » indique un partitionnement du sous-bloc Br₇ en quatre sous-blocs plus petits Br₉, Br₁₀, Br₁₁, Br₁₂,
- le sixième bit « 0 » indique une absence de partitionnement du sous-bloc Br₉,
- le septième bit « 0» indique une absence de partitionnement du sous-bloc Br₁₀,
- le huitième bit « 0 » indique une absence de partitionnement du sous-bloc Br₁₁,
- le neuvième bit « 0 » indique une absence de partitionnement du sous-bloc Br₁₂,
- le dixième bit « 0 » indique une absence de partitionnement du sous-bloc Br₈,
- le onzième bit « 0 » indique une absence de partitionnement du sous-bloc Br₂,
- le douzième bit « 0 » indique une absence de partitionnement du sous-bloc Br₃,
- le treizième bit « 0 » indique une absence de partitionnement du sous-bloc Br₄.

S'agissant de la séquence Sᵤ :
- le premier bit « 1 » indique un partitionnement du bloc CTBᵤ en quatre sous-blocs B₁, B₂, B₃, B₄,
- le deuxième bit « 1 » indique un partitionnement du bloc B₁ en quatre sous-blocs B₅, B₆, B₇, B₈,
- le troisième bit « 0 » indique une absence de partitionnement du sous-bloc B₅,
- le quatrième bit « 0 » indique une absence de partitionnement du sous-bloc B₆,
- le cinquième bit « 0» indique une absence de partitionnement du sous-bloc B₇,
- le sixième bit « 0 » indique une absence de partitionnement du sous-bloc B₈,
- le septième bit « 0 » indique une absence de partitionnement du sous-bloc B₂,
- le huitième bit « 0 » indique une absence de partitionnement du sous-bloc B₃,
- le neuvième bit « 0 » indique une absence de partitionnement du sous-bloc B₄.

Les trois derniers bits de la séquence Sᵤ sont décalés à la fin de cette dernière, de façon à indiquer une différence de partitionnement entre le sous-bloc B₇ et le sous-bloc Br₇ du bloc CTBrᵢ.

Ladite étape de prédiction C5 représentée à la **figure 2** comprend :
- une sous-étape C51 de comparaison des séquences Srᵢ et Sᵤ entre elles ou bien des partitionnements correspondants entre eux,
- une sous-étape C52 de détermination de bits résiduels représentatifs de ladite comparaison, selon un critère de comparaison prédéterminé.

A l'issue de l'étape de prédiction C5, est obtenue une séquence S'ᵤ représentative du partitionnement prédit du bloc courant CTBᵤ.

L'étape de prédiction C5 est réitérée pour l'ensemble des séquences S₁ à S_{S} de façon à obtenir des séquences S'₁ à S'_{S} représentatives du partitionnement prédit des blocs courants CTB₁ à CTB_{S}.

La mise en oeuvre ou non de ladite étape de prédiction dans un codeur compatible HEVC est signalée par une information numérique telle qu'un bit à « 1 » pour indiquer que la prédiction du partitionnement a été effectuée, ou bien un bit à « 0 » pour indiquer que la prédiction du partitionnement n'a pas été effectuée. Selon les cas, un tel bit peut être signalé par séquence d'images, ou bien par image, ou encore par portion d'image (« slice » en anglais).

Selon un premier critère de comparaison, il est procédé aux étapes suivantes consistant à:
- comparer le partitionnement du bloc courant CTBᵤ et du bloc déjà codé puis décodé CTBrᵢ à niveau égal de profondeur de partitionnement k₁, k₂,
- itérer ladite comparaison jusqu'audit niveau k_{P} prédéterminé de profondeur de partitionnement,
- à l'issue de chaque comparaison, déterminer soit une information numérique résiduelle d'une première valeur, soit une information numérique résiduelle d'une deuxième valeur si les partitionnements comparés sont respectivement soit les mêmes, soit différents.

A cet effet, ladite comparaison est effectuée conformément à la table T1 ci-dessous jusqu'au niveau de profondeur de partitionnement k_{P} qui est égal à 4 dans l'exemple décrit :

| CTBrᵢ | CTBᵤ | S'ᵤ |
|---|---|---|
| 1 | 1 | 0 |
| 0 | 0 | 0 |
| 1 | 0 | 1 |
| 0 | 1 | 1 |

Dans cet exemple, l'information résiduelle d'une première valeur est un bit de valeur « 0 » et l'information résiduelle d'une deuxième valeur est un bit de valeur «1 ».

La table T1 comprend :
- une première ligne indiquant que si à niveau égal de profondeur de partitionnement, un sous-bloc du bloc courant CTBᵤ et un sous-bloc correspondant du bloc codé puis décodé CTBrᵢ ont été partitionnés identiquement (bit à « 1 »), la valeur de l'information résiduelle issue de la comparaison est un bit à « 0 » ;
- une deuxième ligne indiquant que si à niveau égal de profondeur de partitionnement, ni un sous-bloc du bloc courant CTBᵤ, ni un sous-bloc correspondant du bloc codé puis décodé CTBrᵢ n'a été partitionné (bit à « 0 »), la valeur de l'information résiduelle issue de la comparaison est un bit à « 0 » ;
- une troisième ligne indiquant que si à niveau égal de profondeur de partitionnement, un sous-bloc du bloc codé puis décodé CTBrᵢ a été partitionné (bit à « 1 ») et qu'un sous-bloc correspondant du bloc courant CTBᵤ n'a pas été partitionné (bit à « 0 »), la valeur de l'information résiduelle issue de la comparaison est un bit à « 1 » ;
- une quatrième ligne indiquant que si à niveau égal de profondeur de partitionnement, un sous-bloc du bloc codé puis décodé CTBrᵢ n'a pas été partitionné (bit à « 0 ») alors qu'un sous-bloc correspondant du bloc courant CTBᵤ a été partitionné (bit à « 1 »), la valeur de l'information résiduelle issue de la comparaison est un bit à « 1 ».

La comparaison des partitionnements à niveau égal de profondeur de partitionnement est effectuée dans un ordre prédéterminé d'ordonnancement des sous-blocs du bloc courant CTBᵤ et du bloc codé puis décodé CTBrᵢ, tel que par exemple l'ordre « raster scan » bien connu de l'homme du métier.

A l'issue de la comparaison selon la table T1, la séquence de bits résiduels représentative du partitionnement prédit du bloc courant CTBᵤ est la suivante :

| | | | | | | | | | | | | | |
|---|---|---|---|---|---|---|---|---|---|---|---|---|---|
| S'ᵤ | 0 | 0 | 0 | 0 | 0 | 0 | 0 | 1 | 0 | 0 | 0 | 0 | 0 |

Le dernier bit à « 0 » de la séquence S'ᵤ indique qu'aucun des blocs CTBᵤ et CTBrᵢ n'a atteint le niveau de profondeur de partitionnement k_{P}=4.

A titre d'alternative, une autre convention de valeurs de bits peut être utilisée dans la table T1, telle que celle ci-dessous :

| CTBrᵢ | CTBᵤ | S'ᵤ |
|---|---|---|
| 1 | 1 | 1 |
| 0 | 0 | 1 |
| 1 | 0 | 0 |
| 0 | 1 | 0 |

Selon un second critère de comparaison qui est proche du premier critère de comparaison précité, ladite comparaison est effectuée conformément à la table T2 ci-dessous jusqu'au niveau de profondeur de partitionnement k_{P} qui est égal à 4 dans l'exemple décrit :

| CTBrᵢ | CTBᵤ | S'ᵤ |
|---|---|---|
| 1 | 1 | 0 |
| 0 | 0 | 0 |
| 1 | 0 | 1+bit indiquant la localisation du partitionnement différent du sous-bloc du bloc CTBrᵢ |
| 0 | 1 | 1+bit indiquant la localisation du partitionnement différent du sous-bloc du bloc CTBᵤ |

Dans cet exemple, l'information résiduelle d'une première valeur est un bit de valeur « 0 » et l'information résiduelle d'une deuxième valeur est un bit de valeur «1», suivi d'un bit indiquant la localisation du partitionnement différent du sous-bloc du bloc courant CTBᵤ ou du bloc CTBrᵢ codé puis décodé.

La table T2 comprend :
- une première ligne indiquant que si à niveau égal de profondeur de partitionnement, un sous-bloc du bloc courant CTBᵤ et un sous-bloc correspondant du bloc codé puis décodé CTBrᵢ ont été partitionnés identiquement (bit à « 1 »), la valeur de l'information résiduelle issue de la comparaison est un bit à « 0 » ;
- une deuxième ligne indiquant que si à niveau égal de profondeur de partitionnement, ni un sous-bloc du bloc courant CTBᵤ, ni un sous-bloc correspondant du bloc codé puis décodé CTBrᵢ n'a été partitionné (bit à « 0 »), la valeur de l'information résiduelle issue de la comparaison est un bit à « 0 » ;
- une troisième ligne indiquant que si à niveau égal de profondeur de partitionnement, un sous-bloc du bloc codé puis décodé CTBrᵢ a été partitionné (bit à « 1 ») alors qu'un sous-bloc correspondant du bloc courant CTBᵤ n'a pas été partitionné (bit à « 0 »), la valeur de l'information résiduelle issue de la comparaison est un bit à « 1 » suivi d'un autre bit indiquant la localisation du partitionnement différent du sous-bloc du bloc codé puis décodé CTBrᵢ ;
- une quatrième ligne indiquant que si à niveau égal de profondeur de partitionnement, un sous-bloc du bloc codé puis décodé CTBrᵢ n'a pas été partitionné (bit à « 0 ») alors qu'un sous-bloc correspondant du bloc courant CTBᵤ a été partitionné (bit à « 1 »), la valeur de l'information résiduelle issue de la comparaison est un bit à « 1 » suivi d'un autre bit indiquant la localisation du partitionnement différent du sous-bloc du bloc CTBᵤ.

A l'issue de la comparaison selon la table T2, la séquence de bits résiduels représentative du partitionnement prédit du bloc courant CTBᵤ est la suivante :

| | | | | | | | | |
|---|---|---|---|---|---|---|---|---|
| S'ᵤ | 0 | 0 | 1 | 0 | 0 | 0 | 1 | 0 |

Dans cette séquence S'ᵤ, en référence aux **figures 4A** et **4B** :
- le premier bit « 0 » indique un même partitionnement des blocs CTBrᵢ et CTBᵤ en quatre sous-blocs, en considération du premier niveau de profondeur de partitionnement,
- le deuxième bit « 0» indique un même partitionnement du premier sous-bloc en haut à gauche des blocs CTBrᵢ et CTBᵤ, en considération du second niveau de profondeur de partitionnement,
- le troisième bit « 1 » indique un partitionnement d'un sous-bloc du premier sous-bloc situé en haut à gauche du bloc codé puis décodé CTBrᵢ qui n'apparait pas dans le sous-bloc correspondant du bloc courant CTBᵤ, en considération du troisième niveau de profondeur de partitionnement,
- le quatrième bit « 0 » indique qu'aucun des blocs CTBᵤ et CTBrᵢ n'a atteint le niveau de profondeur de partitionnement k_{P}=4.
- le cinquième bit « 0» indique une absence de partitionnement du sous-bloc Br₅,
- le sixième bit « 0 » indique une absence de partitionnement du sous-bloc Br₆,
- le septième bit « 1 » indique un partitionnement du sous-bloc Br₇ en quatre sous-blocs,
- le huitième bit « 0 » indique une absence de partitionnement du sous-bloc Br₈.

A titre d'alternative, une autre convention de valeurs de bits peut être utilisée dans la table T2, telle que celle ci-dessous :

| CTBrᵢ | CTBᵤ | S'ᵤ |
|---|---|---|
| 1 | 1 | 1 |
| 0 | 0 | 1 |
| 1 | 0 | 0+bit indiquant la localisation du partitionnement différent du sous-bloc du bloc CTBrᵢ |
| 0 | 1 | 0+bit indiquant la localisation du partitionnement différent du sous-bloc du bloc CTBᵤ |

Selon un troisième critère de comparaison, ladite comparaison est effectuée conformément à la table T3 ci-dessous :

| CTBrᵢ | CTBᵤ | S'ᵤ |
|---|---|---|
| 1 | 1 | 1 |
| 0 | 0 | - |
| 1 | 0 | 0 |

La table T3 comprend :
- une première ligne indiquant que si un sous-bloc du bloc courant CTBᵤ et un sous-bloc correspondant du bloc codé puis décodé CTBrᵢ ont été partitionnés identiquement (bit à « 1 »), la valeur de l'information résiduelle issue de la comparaison est un bit à « 1 » ;
- une deuxième ligne indiquant que si ni un sous-bloc du bloc courant CTBᵤ, ni un sous-bloc correspondant du bloc codé puis décodé CTBrᵢ n'a été partitionné (bit à « 0 »), aucune information résiduelle issue de la comparaison n'est déterminée ;
- une troisième ligne indiquant que si un sous-bloc du bloc codé puis décodé CTBrᵢ a été partitionné (bit à « 1 ») alors qu'un sous-bloc correspondant du bloc courant CTBᵤ n'a pas été partitionné (bit à « 0 »), la valeur de l'information résiduelle issue de la comparaison est un bit à « 0 ».

Les séquences Srᵢ et Sᵤ précitées sont alors comparées entre elles, le premier bit de la séquence Srᵢ étant comparé au premier bit de la séquence Sᵤ, et ainsi de suite jusqu'au dernier bit de chacune des séquences.

A l'issue de la comparaison selon la table T3, la séquence de bits résiduels représentative du partitionnement prédit du bloc courant CTBᵤ est la suivante :

| | | | | | | | | | | | | | |
|---|---|---|---|---|---|---|---|---|---|---|---|---|---|
| S'ᵤ | 1 | 1 | | | 0 | | | | | | | | |

Selon un quatrième critère de comparaison, ladite comparaison est effectuée conformément à la table T4 ci-dessous :

| CTBrᵢ | CTBᵤ | S'ᵤ |
|---|---|---|
| 1 | 1 | - |
| 0 | 0 | 0 |
| 1 | 0 | 1+ bit indiquant le type du partitionnement différent du sous-bloc du bloc CTBrᵢ |

La table T4 comprend :
- une première ligne indiquant que si un sous-bloc du bloc courant CTBᵤ et un sous-bloc correspondant du bloc codé puis décodé CTBrᵢ ont été partitionnés identiquement (bit à « 1 »), aucune information résiduelle issue de la comparaison n'est déterminée ;
- une deuxième ligne indiquant que si ni un sous-bloc du bloc courant CTBᵤ, ni un sous-bloc correspondant du bloc codé puis décodé CTBrᵢ n'a été partitionné (bit à « 0 »), la valeur de l'information résiduelle issue de la comparaison est un bit à « 0» ;
- une troisième ligne indiquant que si un sous-bloc du bloc codé puis décodé CTBrᵢ a été partitionné (bit à « 1 ») alors qu'un sous-bloc correspondant du bloc courant CTBᵤ n'a pas été partitionné (bit à « 0 »), la valeur de l'information résiduelle issue de la comparaison est un bit à « 1 » directement suivi d'autres bits indiquant le type du partitionnement différent du sous-bloc du bloc CTBrᵢ.

Les séquences Srᵢ et Sᵤ précitées sont alors comparées entre elles, le premier bit de la séquence Srᵢ étant comparé au premier bit de la séquence Sᵤ, et ainsi de suite jusqu'au dernier bit de chacune des séquences.

A l'issue de la comparaison selon la table T4, la séquence de bits résiduels représentative du partitionnement prédit du bloc courant CTBᵤ est la suivante :

| | | | | | | | | | | | | | |
|---|---|---|---|---|---|---|---|---|---|---|---|---|---|
| S'ᵤ | | | 0 | 0 | 1 | 0 | 0 | 0 | 0 | 0 | 0 | 0 | 0 |

Dans cette séquence S'ᵤ, les quatre bits à « 0 » qui suivent le bit à
« 1 » indique, en référence à la **figure 4B****,** le partitionnement du sous-bloc Br₇ en quatre sous-blocs Br₉, Br₁₀, Br₁₁, Br₁₂.

Selon un cinquième critère de comparaison, qui est une combinaison des deuxième et troisième critères de comparaison précités, ladite comparaison est effectuée conformément à la table T5 ci-dessous, en partant du deuxième niveau de profondeur de partitionnement jusqu'au niveau de profondeur de partitionnement k_{P} qui est égal à 4 dans l'exemple décrit :

| CTBrᵢ | CTBᵤ | Bit de niveau de profondeur | S'ᵤ |
|---|---|---|---|
| 1 | 1 | 1 | 1 |
| 0 | 0 | - | - |
| 1 | 0 | 1 | 0 |
| 1 | 1 | 0 | - |
| 1 | 0 | 0 | - |

La table T5 reprend les mêmes conventions que la table T3. Elle se différentie de cette dernière par une colonne supplémentaire intitulée « bit de niveau de profondeur » qui indique que dans le cas où à niveau égal de profondeur de partitionnement, un sous-bloc du bloc courant CTBᵤ et un sous-bloc correspondant du bloc codé puis décodé CTBrᵢ ont été partitionnés différemment, le bit de niveau de profondeur est mis à « 1 » pour signaler explicitement une différence de partitionnement entre un sous-bloc du boc courant CTBᵤ et un sous-bloc du bloc codé puis décodé CTBrᵢ.

A l'issue de la comparaison selon la table T5, la séquence de bits résiduels représentative du partitionnement prédit du bloc courant CTBᵤ est la suivante :

| Bits niveau de profondeur | 0 | 1 | 0 | | | | | | | | | | |
|---|---|---|---|---|---|---|---|---|---|---|---|---|---|
| S'ᵤ | 1 | | | | 0 | | | | | 0 | | | |

Dans cette séquence, en référence aux **figures 4A** et **4B** :
- le premier bit de niveau de profondeur est à « 0 », puisqu'au deuxième niveau de profondeur de partitionnement, le partitionnement du sous-bloc B₁ du bloc CTBᵤ est le même que le partitionnement du sous-bloc Br₁ du bloc CTBrᵢ,
- le deuxième bit de niveau de profondeur est à « 1 », puisqu'au troisième niveau de profondeur de partitionnement, le sous-bloc B₇ du bloc CTBᵤ n'est pas partitionné, alors que le sous-bloc Br₇ du bloc CTBrᵢ est partitionné en quatre sous-blocs Br₉ à Br₁₂,
- le troisième bit de niveau de profondeur est à « 0 », étant donné qu'aucun des blocs CTBᵤ et CTBrᵢ n'a atteint le quatrième niveau de profondeur de partitionnement k_{P}.

En référence à la **figure 2****,** à l'issue de l'étape de prédiction C5, la séquence S'ᵤ représentative du partitionnement prédit du bloc courant CTBᵤ est encodée au cours d'une étape C6.

Une telle étape d'encodage est mise en oeuvre par un codeur entropique CE représenté à la **figure 3****.**

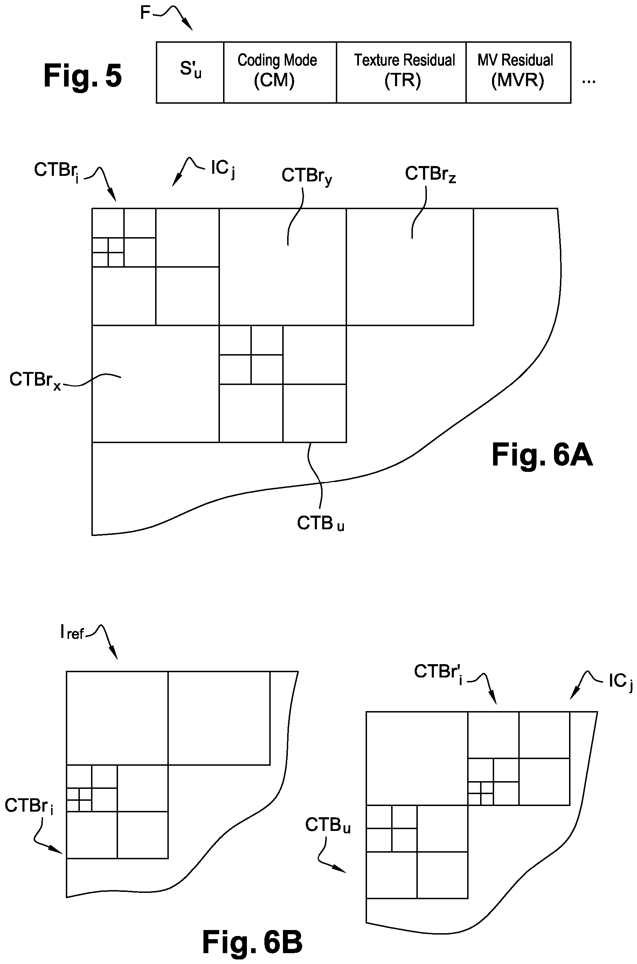

Il est ensuite procédé, au cours d'une étape C7 représentée sur la **figure 2****,** à la construction d'un signal de données F représenté sur la **figure 5** qui contient la séquence S'ᵤ, ainsi que d'autres données résiduelles classiques, telles que par exemple le mode de codage du bloc CTBᵤ « Coding Mode » noté CM, ses résiduels de texture « Texture Residual » notés TR, ses résiduels de vecteur mouvement MV « MV Residual », notés MVR.

La construction du signal de données F est mise en oeuvre dans un module logiciel CF de construction de flux, tel que représenté sur la **figure 3****.**

Le signal de données F est ensuite transmis par un réseau de communication (non représenté), à un terminal distant. Celui-ci comporte un décodeur qui sera décrit plus en détail dans la suite de la description.

En référence aux **figures 6A** à **6C****,** différentes positions pré-identifiées du bloc codé puis décodé CTBrᵢ vont maintenant être décrites.

En référence à la **figure 6A****,** l'image courante ICⱼ est par exemple une image en deux dimensions. Dans cet exemple, le bloc codé puis décodé CTBrᵢ est sélectionné dans une partie de l'image courante ICⱼ qui a déjà été codée puis décodée. Une telle sélection est effectuée parmi par exemple quatre blocs voisins du bloc courant CTBᵤ qui sont les suivants :
- le bloc CTBrₓ situé à gauche du bloc courant CTBᵤ,
- le bloc CTBrᵢ lui-même, situé au-dessus et à gauche du bloc courant CTBᵤ,
- le bloc CTBr_{y} situé au-dessus du bloc courant CTBᵤ,
- le bloc CTBr_{z} situé au-dessus et à droite du bloc courant CTBᵤ.

L'indice du bloc CTBrᵢ sélectionné est transmis dans le signal de données F.

En référence à la **figure 6B****,** l'image ICⱼ est toujours une image en deux dimensions. Dans cet exemple, le bloc CTBrᵢ codé puis décodé est sélectionné dans une image I_{ref} qui a déjà été codée puis décodée et qui précède par exemple immédiatement l'image courante ICⱼ. Le bloc CTBrᵢ codé puis décodé est situé dans l'image I_{ref} par exemple à la même position que le bloc courant CTBᵤ dans l'image courante ICⱼ. L'indice du bloc CTBrᵢ codé puis décodé est transmis dans le signal de données F.

Selon une alternative possible de l'exemple représenté à la **figure 6B****,** un bloc codé puis décodé peut, de la même façon que dans l'exemple de la **figure 6A****,** être sélectionné dans une partie de l'image courante ICⱼ qui a déjà été codée puis décodée, au lieu d'être sélectionné dans l'image I_{ref} précitée. Dans l'exemple de cette variante représentée sur la **figure 6B****,** le bloc codé puis décodé qui est sélectionné, noté CTB'rᵢ sur la **figure 6B****,** est le bloc situé au-dessus et à droite du bloc courant CTBᵤ. L'indice du bloc CTB'rᵢ sélectionné est transmis dans le signal de données F.

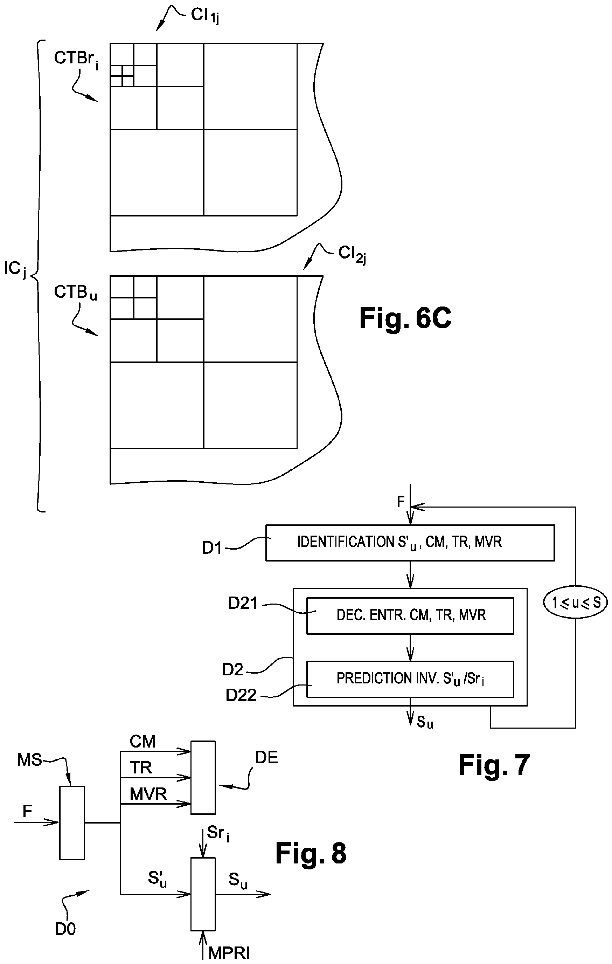

En référence à la **figure 6C****,** l'image ICⱼ est une image en trois dimensions comprenant une première composante d'image CI₁ⱼ et une deuxième composante d'image CI₂ⱼ. La première composante d'image CI₁ⱼ est acquise en association avec la deuxième composante d'image CI₂ⱼ. Dans l'exemple représenté, le bloc CTBrᵢ codé puis décodé est sélectionné dans la première composante d'image CI₁ⱼ. Une telle composante est considérée comme étant la composante d'image de référence, c'est-à-dire qui a été préalablement codée, puis décodée, pour servir au codage de la deuxième composante d'image CI₂ⱼ dans laquelle est situé le bloc courant CTBᵤ. L'indice du bloc CTBrᵢ codé puis décodé est transmis dans le signal de données F.

De telles première et deuxième composantes d'image sont par exemple respectivement une composante de texture et sa composante de profondeur associée, telles que mises en oeuvre dans le nouveau format de codage vidéo, appelé MVD (pour « Multiview Video + Depth » en anglais) qui fait l'objet de développements actuels.

Alternativement, les première et deuxième composantes d'image précitées pourraient être respectivement une composante de profondeur et sa composante de texture associée.

D'autres types de première et deuxième composantes d'image peuvent bien sûr être envisagés.

Ainsi, les première et deuxième composantes d'image peuvent être respectivement :
- deux vues d'une même image multi-vues, ou bien
- une composante luma et une composante chroma, ou bien
- deux couches différentes lors d'un codage vidéo scalable.

Il est également possible d'envisager le codage d'une première composante d'image par rapport à une deuxième composante d'image et à une troisième composante d'image. Dans ce cas par exemple :
- la première composante d'image peut être une composante Y,
- la deuxième composante d'image peut être une composante U,
- la troisième composante d'image peut être une composante V.

### Description détaillée du procédé de décodage de l'invention

Un mode de réalisation de l'invention va maintenant être décrit, dans lequel le procédé de décodage selon l'invention est utilisé pour décoder une séquence d'images selon un flux binaire proche de celui qu'on obtient par un codage conforme par exemple à la norme en cours d'élaboration HEVC 2D.

Dans ce mode de réalisation, le procédé de décodage selon l'invention est par exemple implémenté de manière logicielle ou matérielle par modifications d'un décodeur initialement conforme à la norme HEVC 2D. Le procédé de décodage selon l'invention est représenté sous la forme d'un algorithme comportant des étapes D1 à D2 telles que représentées à la **figure 7****.**

Selon le mode de réalisation de l'invention, le procédé de décodage selon l'invention est implémenté dans un dispositif de décodage DO représenté à la **figure 8****,** qui est adapté à recevoir le signal de données F délivré par le codeur CO de la **figure 3****.**

Au cours d'une étape D1 représentée à la **figure 7****,** il est procédé à l'identification, dans le signal de données F, de la séquence S'ᵤ, du mode de codage CM, des résiduels de texture TR, des résiduels de vecteurs mouvement MVR associés au bloc courant CTBᵤ.

Une telle étape est mise en oeuvre par un module logiciel de sélection MS, tel que représenté à la **figure 8****,** qui est adapté à placer un pointeur de lecture dans le signal F au début des données de la séquence S'ᵤ.

Au cours d'une étape D2 représentée à la **figure 7****,** il est procédé classiquement à une sous-étape D21 de décodage entropique du mode de codage CM, des résiduels de texture TR, des résiduels de vecteurs mouvement MVR associés au bloc courant CTBᵤ.

Une telle étape est mise en oeuvre par un module de décodage entropique DE, tel que représenté sur la **figure 8****.**

Au cours de ladite même étape D2 représentée à la **figure 7****,** il est procédé à une sous-étape D22 de reconstruction de la séquence Sᵤ représentative du partitionnement du bloc courant CTBᵤ, à partir de la séquence Srᵢ représentative du partitionnement préalablement reconstruit du bloc décodé CTBrᵢ et de la séquence S'ᵤ lue. La séquence Srᵢ a été préalablement reconstruite par un module de prédiction inverse MPRI tel que représenté sur la **figure 8****.**

Plus précisément, une telle reconstruction consiste à effectuer une prédiction inverse de celle effectuée à l'étape de prédiction C5 de la **figure 2****.**

A cet effet, la séquence Srᵢ représentative du partitionnement préalablement reconstruit du bloc décodé CTBrᵢ est ajoutée à la séquence S'ᵤ lue, délivrant ainsi la séquence reconstruite Sᵤ représentative du partitionnement du bloc courant CTBᵤ.

Les sous-étapes D21 et D22 peuvent être effectuées en même temps ou alternativement, dans n'importe quel ordre.

Les étapes D1 et D2 sont réitérées pour toutes les séquences S'₁ à S'_{S} identifiées dans le signal de données F.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Procédé de codage d'une image courante (ICⱼ) partitionnée préalablement en blocs, mettant en oeuvre, pour un bloc (CTBᵤ) courant à coder, les étapes consistant à :
- partitionner (C3) au moins une fois le bloc courant en plusieurs sous-blocs,
- représenter (C4) le partitionnement du bloc courant sous la forme d'une première séquence d'informations numériques,
- prédire (C5) le partitionnement du bloc courant par rapport au partitionnement d'un bloc déjà codé puis décodé (CTBrⱼ) et représenté sous la forme d'une deuxième séquence d'informations numériques,
ledit procédé de codage étant **caractérisé en ce que** l'étape de prédiction (C5) est mise en oeuvre par comparaison (C51) des première et deuxième séquences entre elles, la première information numérique de la première séquence étant comparée à la première information numérique de la deuxième séquence, et ainsi de suite jusqu'à la dernière information numérique de chacune des séquences, ou bien par comparaison (C51) desdits partitionnements correspondants entre eux, puis par détermination (C52) selon un critère de comparaison prédéterminé :
- d'une première information numérique indiquant si un sous-bloc, issu du partitionnement dudit bloc déjà codé puis décodé (CTBrⱼ) et correspondant à un sous-bloc issu du partitionnement du bloc courant, a été partitionné identiquement au sous-bloc issu du partitionnement du bloc courant,
- d'une deuxième information numérique indiquant si un sous-bloc, issu du partitionnement dudit bloc déjà codé puis décodé (CTBrⱼ) et correspondant à un sous-bloc issu du partitionnement du bloc courant, a été partitionné à nouveau,
aucune information numérique n'étant en outre déterminée si ni un sous-bloc, issu du partitionnement dudit bloc déjà codé puis décodé (CTBrⱼ) et correspondant à un sous-bloc issu du partitionnement du bloc courant, ni ledit sous-bloc issu du partitionnement du bloc courant, n'a été partitionné à nouveau,
et **en ce que**, à l'issue de ladite détermination (C52), ledit procédé de codage comprend les étapes consistant à :
- encoder (C6) lesdites première et deuxième informations numériques déterminées,
- transmettre à un décodeur un signal de données (F) contenant lesdites première et deuxième informations numériques encodées ainsi qu'une information numérique indiquant si ladite étape de prédiction du partitionnement a été mise en oeuvre ou pas.

2. Procédé de codage selon la revendication 1, dans lequel le bloc courant (CTBᵤ) et le bloc (CTBrⱼ) déjà codé puis décodé étant partitionnés au moins une fois respectivement jusqu'à l'obtention de deux niveaux (k₁, k₂) de profondeur de partitionnement qui sont inférieurs ou égaux à un niveau (k_{P}) prédéterminé de profondeur de partitionnement (k₁≥0, k₂≥0, k_{P}≥0), ledit critère de comparaison prédéterminé est le suivant :
- comparer le partitionnement du bloc courant et du bloc déjà codé puis décodé à niveau égal de profondeur de partitionnement (k₁, k₂),
- itérer ladite comparaison jusqu'audit niveau (k_{P}) prédéterminé de profondeur de partitionnement,
- à l'issue de chaque comparaison, déterminer soit une information numérique d'une première valeur, soit une information numérique d'une deuxième valeur si les partitionnements comparés sont respectivement soit les mêmes, soit différents.

3. Procédé de codage selon la revendication 1, dans lequel ledit critère de comparaison est le suivant :
• aucune information numérique n'est déterminée si un sous-bloc issu du partitionnement du bloc courant et un sous-bloc correspondant issu du partitionnement du bloc déjà codé puis décodé n'ont pas été partitionnés à nouveau,
• une information numérique est déterminée si un sous-bloc issu du partitionnement du bloc courant a été partitionné à nouveau et si un sous-bloc correspondant issu du partitionnement du bloc déjà codé puis décodé a été partitionné à nouveau ou non.

4. Procédé de codage selon la revendication 1, dans lequel ledit critère de comparaison est le suivant :
• aucune information numérique n'est déterminée si un sous-bloc issu du partitionnement du bloc courant et un sous-bloc correspondant issu du partitionnement du bloc déjà codé puis décodé ont été partitionnés à nouveau,
• une information numérique est déterminée si un sous-bloc issu du partitionnement du bloc courant et un sous-bloc correspondant issu du partitionnement du bloc déjà codé puis décodé n'ont pas été partitionnés à nouveau,
• une information numérique est transmise si un sous-bloc issu du partitionnement du bloc courant a été partitionné à nouveau et si un sous-bloc correspondant issu du partitionnement du bloc codé puis décodé n'a pas été partitionné à nouveau.

5. Procédé de codage selon l'une quelconque des revendications 1 à 4, dans lequel le bloc codé puis décodé a une position pré-identifiée :
- dans une partie décodée de l'image courante, ou bien
- dans une autre image déjà décodée, ou bien
- dans une composante d'image associée à une autre composante d'image dans laquelle est situé le bloc courant.

6. Dispositif de codage d'une image courante partitionnée préalablement en blocs, destiné à mettre en oeuvre le procédé de codage selon l'une quelconque des revendications 1 à 5, ledit dispositif comprenant, pour un bloc courant à coder,
- des moyens (MP2) de partitionnement pour partitionner au moins une fois le bloc courant en plusieurs sous-blocs,
- des moyens (PSB) de représentation du partitionnement du bloc courant sous la forme d'une première séquence d'informations numériques (Sᵤ),
- des moyens (MPR) de prédiction du partitionnement du bloc courant par rapport au partitionnement d'un bloc déjà codé puis décodé et représenté sous la forme d'une deuxième séquence d'informations numériques,
ledit dispositif de codage étant **caractérisé en ce que** lesdits moyens de prédiction sont aptes à comparer des première et deuxième séquences entre elles, la première information numérique de la première séquence étant comparée à la première information numérique de la deuxième séquence, et ainsi de suite jusqu'à la dernière information numérique de chacune des séquences, ou bien à comparer lesdits partitionnements correspondants entre eux, puis à déterminer selon un critère de comparaison prédéterminé :
- une première information numérique indiquant si un sous-bloc, issu du partitionnement dudit bloc déjà codé puis décodé (CTBrⱼ) et correspondant à un sous-bloc issu du partitionnement du bloc courant, a été partitionné identiquement au sous-bloc issu du partitionnement du bloc courant,
- une deuxième information numérique indiquant si un sous-bloc, issu du partitionnement dudit bloc déjà codé puis décodé (CTBrⱼ) et correspondant à un sous-bloc issu du partitionnement du bloc courant, a été partitionné à nouveau,
aucune information numérique n'étant en outre déterminée si ni un sous-bloc, issu du partitionnement dudit bloc déjà codé puis décodé (CTBrⱼ) et correspondant à un sous-bloc issu du partitionnement du bloc courant, ni ledit sous-bloc issu du partitionnement du bloc courant , n'a été partitionné à nouveau,
et **en ce que** :
- des moyens (CE) d'encodage dudit dispositif de codage encodent lesdites première et deuxième informations numériques déterminées,
- des moyens de transmission du dispositif de codage transmettent un signal de données (F) contenant lesdites première et deuxième informations numériques encodées, ainsi qu'une information numérique indiquant si lesdits moyens de prédiction de partitionnement ont été activés ou pas.

7. Signal de données (F) représentatif d'une image codée selon le procédé de codage selon l'une quelconque des revendications 1 à 5, **caractérisé en ce qu'**il porte ladite au moins une information numérique encodée.

8. Programme d'ordinateur comportant des instructions pour la mise en oeuvre du procédé de codage selon l'une quelconque des revendications 1 à 5, lorsque ce programme est exécuté par un processeur.

9. Procédé de décodage d'un signal de données (F) représentatif d'une image courante préalablement partitionnée en blocs et qui a été codée, mettant en oeuvre une étape consistant à reconstruire préalablement le partitionnement d'un bloc décodé,
ledit procédé de décodage étant **caractérisé en ce qu'**il comprend, pour un bloc (CTBᵤ) courant à décoder, les étapes consistant à :
- identifier (D1), dans ledit signal de données (F), une information numérique indiquant si une prédiction du partitionnement a été mise en oeuvre ou pas au codage, ainsi que la présence ou non de première et deuxième informations numériques (S'ᵤ) représentatives d'une comparaison effectuée au codage entre une première séquence (Sᵤ) d'informations numériques représentant le partitionnement d'un bloc courant et une deuxième séquence (Srᵢ) d'informations numériques représentant ledit partitionnement d'un bloc décodé, la première information numérique de la première séquence ayant été comparée à la première information numérique de la deuxième séquence, et ainsi de suite jusqu'à la dernière information numérique de chacune des séquences, ou bien entre lesdits partitionnements correspondants entre eux, selon un critère de comparaison prédéterminé pour lequel :
- ladite première information numérique dont la présence est identifiée indique si un sous-bloc, issu du partitionnement dudit bloc déjà codé puis décodé (CTBrⱼ) et correspondant à un sous-bloc issu du partitionnement du bloc courant, a été partitionné au codage identiquement au sous-bloc issu du partitionnement du bloc courant,
- ladite deuxième information numérique dont la présence est identifiée indique si un sous-bloc, issu du partitionnement dudit bloc décodé et correspondant à un sous-bloc issu du partitionnement du bloc courant, a été partitionné à nouveau au codage,
aucune information numérique n'étant en outre identifiée si ni un sous-bloc, issu du partitionnement dudit bloc déjà codé puis décodé (CTBrⱼ) et correspondant à un sous-bloc issu du partitionnement du bloc courant, ni ledit sous-bloc issu du partitionnement du bloc courant, n'a été partitionné à nouveau au codage,
- reconstruire (D22) le partitionnement du bloc courant à partir dudit partitionnement reconstruit du bloc décodé et desdites première et deuxième informations numériques dont la présence a été identifiée.

10. Dispositif de décodage destiné à mettre en oeuvre le procédé de décodage selon la revendication 9, ledit dispositif étant adapté au décodage d'un signal de données (F) représentatif d'une image courante préalablement partitionnée en blocs et qui a été codée, et comprenant des moyens de reconstruction (MPRI) aptes à reconstruire préalablement le partitionnement d'un bloc décodé,
ledit dispositif de décodage étant **caractérisé en ce qu'**il comprend, pour un bloc (CTBᵤ) courant à décoder :
- des moyens (MS) d'identification, dans ledit signal de données, d'une information numérique indiquant si une prédiction du partitionnement a été mise en oeuvre ou pas au codage, ainsi que de la présence ou non de première et deuxième informations numériques (S'ᵤ) représentatives d'une comparaison effectuée au codage entre une première séquence (Sᵤ) d'informations numériques représentant le partitionnement d'un bloc courant et une deuxième séquence (Srᵢ) d'informations numériques représentant ledit partitionnement d'un bloc décodé, la première information numérique de la première séquence ayant été comparée à la première information numérique de la deuxième séquence, et ainsi de suite jusqu'à la dernière information numérique de chacune des séquences, ou bien entre lesdits partitionnements correspondants entre eux, selon un critère de comparaison prédéterminé pour lequel :
- ladite première information numérique dont la présence est identifiée indique si un sous-bloc, issu du partitionnement dudit bloc déjà codé puis décodé (CTBrⱼ) et correspondant à un sous-bloc issu du partitionnement du bloc courant, a été partitionné au codage identiquement au sous-bloc issu du partitionnement du bloc courant,
- ladite deuxième information numérique dont la présence est identifiée indique si un sous-bloc, issu du partitionnement dudit bloc décodé et correspondant à un sous-bloc issu du partitionnement du bloc courant, a été partitionné à nouveau au codage,
aucune information numérique n'étant en outre identifiée si ni un sous-bloc, issu du partitionnement dudit bloc déjà codé puis décodé (CTBrⱼ) et correspondant à un sous-bloc issu du partitionnement du bloc courant, ni ledit sous-bloc issu du partitionnement du bloc courant, n'a été partitionné à nouveau au codage,
- lesdits moyens de reconstruction (MPRI) étant aptes à reconstruire le partitionnement du bloc courant à partir dudit partitionnement reconstruit du bloc décodé et desdites première et deuxième informations numériques identifiées.

11. Programme d'ordinateur comportant des instructions pour la mise en oeuvre du procédé de décodage selon la revendication 9, lorsque ce programme est exécuté par un processeur.

12. Support d'enregistrement lisible par un ordinateur sur lequel est enregistré un programme d'ordinateur comprenant des instructions pour l'exécution des étapes du procédé de décodage selon la revendication 9, lorsque ce programme est exécuté par un processeur.

## Patentansprüche

1. Verfahren zur Codierung eines aktuellen Bildes (ICⱼ), das vorher in Blöcke aufgeteilt wurde, das für einen zu codierenden aktuellen Block (CTBᵤ) die folgenden Schritte einsetzt:
- mindestens einmal den aktuellen Block in mehrere Unterblöcke aufzuteilen (C3),
- die Aufteilung des aktuellen Blocks in Form einer ersten Sequenz von digitalen Informationen darzustellen (C4),
- die Aufteilung des aktuellen Blocks in Bezug zur Aufteilung eines bereits codierten und dann decodierten Blocks (CTBrⱼ), der in Form einer zweiten Sequenz von digitalen Informationen dargestellt ist, vorherzusagen (C5),
wobei das Codierungsverfahren **dadurch gekennzeichnet ist, dass** der Vorhersageschritt (C5) durch Vergleich (C51) der ersten und zweiten Sequenzen miteinander eingesetzt wird, wobei die erste digitale Information der ersten Sequenz mit der ersten digitalen Information der zweiten Sequenz verglichen wird, und so weiter bis zur letzten digitalen Information der Sequenzen, oder auch durch Vergleich (C51) der entsprechenden Aufteilungen untereinander und dann Bestimmung (C52) nach einem vorbestimmten Vergleichskriterium:
- einer ersten digitalen Information, die anzeigt, ob ein Unterblock, der von der Aufteilung des bereits codierten und dann decodierten Blocks (CTBrⱼ) stammt und einem Unterblock entspricht, der von der Aufteilung des aktuellen Blocks stammt, identisch auf den Unterblock, der von der Aufteilung des aktuellen Blocks stammt, aufgeteilt wurde,
- einer zweiten digitalen Information, die anzeigt, ob ein Unterblock, der von der Aufteilung des bereits codierten und dann decodierten Blocks (CTBrⱼ) stammt und einem Unterblock entspricht, der von der Aufteilung des aktuellen Blocks stammt, neuerlich aufgeteilt wurde,
wobei keine digitale Information ferner bestimmt wird, wenn weder ein Unterblock, der von der Aufteilung des bereits codierten und dann decodierten Blocks (CTBrⱼ) stammt und einem Unterblock entspricht, der von der Aufteilung des aktuellen Blocks stammt, noch der Unterblock, der von der Aufteilung des aktuellen Blocks stammt, neuerlich aufgeteilt wurde,
und dass nach der Bestimmung (C52) das Codierungsverfahren die folgenden Schritte umfasst:
- die erste und zweite digitale Information zu codieren (C6),
- an einen Decoder ein Datensignal (F) zu übertragen, das die erste und zweite codierte digitale Information sowie eine digitale Information enthält, die anzeigt, ob der Schritt der Vorhersage der Aufteilung eingesetzt wurde oder nicht.

2. Codierungsverfahren nach Anspruch 1, bei dem der aktuelle Block (CTBᵤ) und der bereits codierte und dann decodierte Block (CTBrⱼ) mindestens einmal jeweils bis zum Erhalt von zwei Niveaus (k₁, k₂) einer Aufteilungstiefe aufgeteilt werden, die kleiner oder gleich einem vorbestimmten Niveau (kₚ) einer Aufteilungstiefe (k₁≥0, k₂≥0, kₚ≥0) sind, wobei das vorbestimmte Vergleichskriterium folgendes ist:
- Vergleich der Aufteilung des aktuellen Blocks und des bereits codierten und dann decodierten Blocks mit einem gleichen Niveau einer Aufteilungstiefe (k₁, k₂),
- Iteration des Vergleichs bis zu dem vorbestimmten Niveau (kₚ) einer Aufteilungstiefe,
- nach jedem Vergleich Bestimmung entweder einer digitalen Information eines ersten Werts oder einer digitalen Information eines zweiten Werts, wenn die verglichenen Aufteilungen dieselben bzw. unterschiedlich sind.

3. Codierungsverfahren nach Anspruch 1, bei dem das Vergleichskriterium folgendes ist:
• es wird keine digitale Information bestimmt, wenn ein aus der Aufteilung des aktuellen Blocks stammender Unterblock und ein entsprechender aus der Aufteilung des codierten und dann decodierten Blocks stammender Unterblock nicht neuerlich aufgeteilt wurden,
• es wird eine digitale Information bestimmt, wenn ein aus der Aufteilung des aktuellen Blocks stammender Unterblock neuerlich aufgeteilt wurde, und wenn ein entsprechender aus der Aufteilung des codierten und dann decodierten Blocks stammender Unterblock neuerlich codiert wurde oder nicht.

4. Codierungsverfahren nach Anspruch 1, bei dem das Vergleichskriterium folgendes ist:
• es wird keine digitale Information bestimmt, wenn ein aus der Aufteilung des aktuellen Blocks stammender Unterblock und ein entsprechender aus der Aufteilung des codierten und dann decodierten Blocks stammender Unterblock neuerlich aufgeteilt wurden,
• es wird eine digitale Information bestimmt, wenn ein aus der Aufteilung des aktuellen Blocks stammender Unterblock und ein entsprechender aus der Aufteilung des codierten und dann decodierten Blocks stammender Unterblock nicht neuerlich aufgeteilt wurden,
• es wird eine digitale Information übertragen, wenn ein aus der Aufteilung des aktuellen Blocks stammender Unterblock neuerlich aufgeteilt wurde, und wenn ein entsprechender aus der Aufteilung des codierten und dann decodierten Blocks stammender Unterblock nicht neuerlich codiert wurde.

5. Codierungsverfahren nach einem der Ansprüche 1 bis 4, bei dem der codierte und dann decodierte Block eine vor-identifizierte Position hat:
- in einem decodierten Teil des aktuellen Bildes, oder auch
- in einem anderen bereits decodierten Bild, oder auch
- in einer Bildkomponente, die einer anderen Bildkomponente zugeordnet ist, in der sich der aktuelle Block befindet.

6. Vorrichtung zur Codierung eines aktuellen Bildes, das vorher in Blöcke aufgeteilt wurde, die dazu bestimmt ist, das Codierungsverfahren nach einem der Ansprüche 1 bis 5 einzusetzen, wobei die Vorrichtung für einen zu codierenden aktuellen Block umfasst:
- Mittel (MP2), um mindestens einmal den aktuellen Block in mehrere Unterblöcke aufzuteilen,
- Mittel (PSB), um die Aufteilung des aktuellen Blocks in Form einer ersten Sequenz von digitalen Informationen (Sᵤ) darzustellen,
- Mittel (MPR), um die Aufteilung des aktuellen Blocks in Bezug zur Aufteilung eines bereits codierten und dann decodierten Blocks, der in Form einer zweiten Sequenz von digitalen Informationen dargestellt ist, vorherzusagen,
wobei die Codierungsvorrichtung **dadurch gekennzeichnet ist, dass** die Vorhersagemittel geeignet sind, die ersten und zweiten Sequenzen miteinander zu vergleichen, wobei die erste digitale Information der ersten Sequenz mit der ersten digitalen Information der zweiten Sequenz verglichen wird, und so weiter bis zur letzten digitalen Information jeder der Sequenzen, oder auch die entsprechenden Aufteilungen untereinander zu vergleichen und dann nach einem vorbestimmten Vergleichskriterium zu bestimmen:
- eine erste digitale Information, die anzeigt, ob ein Unterblock, der von der Aufteilung des bereits codierten und dann decodierten Blocks (CTBrⱼ) stammt und einem Unterblock entspricht, der von der Aufteilung des aktuellen Blocks stammt, identisch auf den Unterblock, der von der Aufteilung des aktuellen Blocks stammt, aufgeteilt wurde,
- eine zweite digitale Information, die anzeigt, ob ein Unterblock, der von der Aufteilung des bereits codierten und dann decodierten Blocks (CTBrⱼ) stammt und einem Unterblock entspricht, der von der Aufteilung des aktuellen Blocks stammt, neuerlich aufgeteilt wurde,
wobei keine digitale Information ferner bestimmt wird, wenn weder ein Unterblock, der von der Aufteilung des bereits codierten und dann decodierten Blocks (CTBrⱼ) stammt und einem Unterblock entspricht, der von der Aufteilung des aktuellen Blocks stammt, noch der Unterblock, der von der Aufteilung des aktuellen Blocks stammt, neuerlich aufgeteilt wurde,
und dass:
- Mittel (CE) zur Codierung der Codierungsvorrichtung die erste und zweite digitale Information codieren,
- Mittel der Codierungsvorrichtung ein Datensignal (F) übertragen, das die erste und zweite codierte digitale Information sowie eine digitale Information enthält, die anzeigt, ob die Vorhersagemittel aktiviert wurden oder nicht.

7. Datensignal (F), das für ein nach dem Codierungsverfahren nach einem der Ansprüche 1 bis 5 codiertes Bild repräsentativ ist, **dadurch gekennzeichnet, dass** es die mindestens eine codierte digitale Information trägt.

8. Computerprogramm, umfassend Befehle für den Einsatz des Codierungsverfahrens nach einem der Ansprüche 1 bis 5, wenn dieses Programm von einem Prozessor ausgeführt wird.

9. Verfahren zur Decodierung eines Datensignals (F), das für ein aktuelles Bild repräsentativ ist, das vorher in Blöcke aufgeteilt wurde und das codiert wurde, das einen Schritt einsetzt, der darin besteht, vorher die Aufteilung eines decodierten Blocks zu rekonstruieren,
wobei das Decodierungsverfahren **dadurch gekennzeichnet ist, dass** es für einen zu decodierenden aktuellen Block (CTBᵤ) die folgenden Schritte umfasst, darin bestehend:
- in dem Datensignal (F) eine digitale Information zu identifizieren (D1), die anzeigt, ob eine Vorhersage der Aufteilung bei der Codierung eingesetzt wurde oder nicht, sowie das Vorhandensein oder nicht von ersten und zweiten digitalen Informationen (S'ᵤ), die für einen Vergleich repräsentativ sind, der beim Codieren zwischen einer ersten Sequenz (Sᵤ) von digitalen Informationen, die die Aufteilung eines aktuellen Blocks darstellen, und einer zweiten Sequenz (Srᵢ) von digitalen Informationen, die die Aufteilung eines decodierten Blocks darstellen, durchgeführt wurde, wobei die erste digitale Information der ersten Sequenz mit der ersten digitalen Information der zweiten Sequenz verglichen wurde, und so weiter bis zur letzten digitalen Information jeder der Sequenzen, oder auch zwischen den Aufteilungen untereinander nach einem vorbestimmten Vergleichskriterium, bei dem:
- die erste digitale Information, deren Vorhandensein identifiziert wurde, anzeigt, ob ein Unterblock, der von der Aufteilung des bereits codierten und dann decodierten Blocks (CTBrⱼ) stammt und einem Unterblock entspricht, der von der Aufteilung des aktuellen Blocks stammt, bei der Codierung identisch auf den Unterblock, der von der Aufteilung des aktuellen Blocks stammt, aufgeteilt wurde,
- die zweite digitale Information, deren Vorhandensein identifiziert wurde, anzeigt, ob ein Unterblock, der von der Aufteilung des decodierten Blocks stammt und einem Unterblock entspricht, der von der Aufteilung des aktuellen Blocks stammt, bei der Codierung neuerlich aufgeteilt wurde,
wobei keine digitale Information ferner identifiziert wird, wenn weder ein Unterblock, der von der Aufteilung des bereits codierten und dann decodierten Blocks (CTBrⱼ) stammt und einem Unterblock entspricht, der von der Aufteilung des aktuellen Blocks stammt, noch der Unterblock, der von der Aufteilung des aktuellen Blocks stammt, bei der Codierung neuerlich aufgeteilt wurde,
- die Aufteilung des aktuellen Blocks aus der rekonstruierten Aufteilung des decodierten Blocks und den ersten und zweiten digitalen Informationen, deren Vorhandensein identifiziert wurde, rekonstruiert wird (D22) .

10. Decodierungsvorrichtung, die dazu bestimmt ist, das Decodierungsverfahren nach Anspruch 9 einzusetzen, wobei die Vorrichtung für die Decodierung eines Datensignals (F) geeignet ist, das für ein aktuelles Bild repräsentativ ist, das vorher in Blöcke aufgeteilt wurde und das codiert wurde, und umfassend Rekonstruktionsmittel (MPRI), die geeignet sind, vorher die Aufteilung eines decodierten Blocks zu rekonstruieren,
wobei die Decodierungsvorrichtung **dadurch gekennzeichnet ist, dass** sie für einen zu decodierenden aktuellen Block (CTBᵤ) umfasst:
- Mittel (MS), um in dem Datensignal eine digitale Information zu identifizieren, die anzeigt, ob eine Vorhersage der Aufteilung bei der Codierung eingesetzt wurde oder nicht, sowie das Vorhandensein oder nicht von ersten und zweiten digitalen Informationen (S'ᵤ), die für einen Vergleich repräsentativ sind, der beim Codieren zwischen einer ersten Sequenz (Sᵤ) von digitalen Informationen, die die Aufteilung eines aktuellen Blocks darstellen, und einer zweiten Sequenz (Srᵢ) von digitalen Informationen, die die Aufteilung eines decodierten Blocks darstellen, durchgeführt wurde, wobei die erste digitale Information der ersten Sequenz mit der ersten digitalen Information der zweiten Sequenz verglichen wurde, und so weiter bis zur letzten digitalen Information jeder der Sequenzen, oder auch zwischen den entsprechenden Aufteilungen untereinander nach einem vorbestimmten Vergleichskriterium, bei dem:
- die erste digitale Information, deren Vorhandensein identifiziert wurde, anzeigt, ob ein Unterblock, der von der Aufteilung des bereits codierten und dann decodierten Blocks (CTBrⱼ) stammt und einem Unterblock entspricht, der von der Aufteilung des aktuellen Blocks stammt, bei der Codierung identisch auf den Unterblock, der von der Aufteilung des aktuellen Blocks stammt, aufgeteilt wurde,
- die zweite digitale Information, deren Vorhandensein identifiziert wurde, anzeigt, ob ein Unterblock, der von der Aufteilung des decodierten Blocks stammt und einem Unterblock entspricht, der von der Aufteilung des aktuellen Blocks stammt, bei der Codierung neuerlich aufgeteilt wurde,
wobei keine digitale Information ferner identifiziert wird, wenn weder ein Unterblock, der von der Aufteilung des bereits codierten und dann decodierten Blocks (CTBrⱼ) stammt und einem Unterblock entspricht, der von der Aufteilung des aktuellen Blocks stammt, noch der Unterblock, der von der Aufteilung des aktuellen Blocks stammt, bei der Codierung neuerlich aufgeteilt wurde,
- wobei die Rekonstruktionsmittel (MPRI) geeignet sind, die Aufteilung des aktuellen Blocks auf Basis der rekonstruierten Aufteilung des decodierten Blocks und der ersten und zweiten identifizierten digitalen Informationen zu rekonstruieren.

11. Computerprogramm, umfassend Befehle für den Einsatz des Decodierungsverfahrens nach Anspruch 9, wenn dieses Programm von einem Prozessor ausgeführt wird.

12. Aufzeichnungsträger, der von einem Computer lesbar ist, auf dem ein Computerprogramm aufgezeichnet ist, umfassend Befehle für die Ausführung der Schritte des Decodierungsverfahrens nach Anspruch 9, wenn dieses Programm von einem Prozessor ausgeführt wird.

## Claims

1. Method of coding a current image (ICⱼ) partitioned previously into blocks, implementing, for a current block (CTBᵤ) to be coded, the steps consisting in:
- partitioning (C3) the current block at least once into several sub-blocks,
- representing (C4) the partitioning of the current block in the form of a first digital information sequence,
- predicting (C5) the partitioning of the current block with respect to the partitioning of an already coded and then decoded block (CTBrⱼ) and represented in the form of a second digital information sequence,
said coding method being **characterized in that** the step of predicting (C5) is implemented by inter-comparison (C51) of the first and second sequences, the first item of digital information of the first sequence being compared with the first item of digital information of the second sequence, and so on and so forth until the last item of digital information of each of the sequences, or else by inter-comparison (C51) of said corresponding partitionings, and then by determination (C52) according to a predetermined comparison criterion:
- of a first item of digital information indicating whether a sub-block, arising from the partitioning of said already coded and then decoded block (CTBrⱼ) and corresponding to a sub-block arising from the partitioning of the current block, has been partitioned identically to the sub-block arising from the partitioning of the current block,
- of a second item of digital information indicating whether a sub-block, arising from the partitioning of said already coded and then decoded block (CTBrⱼ) and corresponding to a sub-block arising from the partitioning of the current block, has been partitioned again,
no item of digital information moreover being determined if neither a sub-block, arising from the partitioning of said already coded and then decoded block (CTBrⱼ) and corresponding to a sub-block arising from the partitioning of the current block, nor said sub-block arising from the partitioning of the current block, has being partitioned again,
and **in that**, on completion of said determination (C52), said method of coding comprises the steps consisting in:
- encoding (C6) said first and second items of digital information determined,
- transmitting to a decoder a data signal (F) containing said first and second items of digital information encoded and an item of digital information indicating whether said step of predicting the partitioning has or has not been implemented.

2. Coding method according to Claim 1, in which the current block (CTBᵤ) and the already coded and then decoded block (CTBrⱼ) being partitioned at least once respectively until two levels (k₁, k₂) of depth of partitioning are obtained which are less than or equal to a predetermined level (k_{P}) of depth of partitioning (k₁≥0, k₂≥0, k_{P}≥0), said predetermined comparison criterion is the following:
- compare the partitioning of the current block and of the already coded and then decoded block at equal level of depth of partitioning (k₁, k₂),
- iterate said comparison until said predetermined level (k_{P}) of depth of partitioning,
- on completion of each comparison, determine either an item of digital information of a first value, or an item of digital information of a second value if the compared partitionings are respectively either the same, or different.

3. Coding method according to Claim 1, in which said comparison criterion is the following:
▪ no item of digital information is determined if a sub-block arising from the partitioning of the current block and a corresponding sub-block arising from the partitioning of the already coded and then decoded block have not been partitioned again,
▪ an item of digital information is determined if a sub-block arising from the partitioning of the current block has been partitioned again and if a corresponding sub-block arising from the partitioning of the already coded and then decoded block has or has not been partitioned again.

4. Coding method according to Claim 1, in which said comparison criterion is the following:
▪ no item of digital information is determined if a sub-block arising from the partitioning of the current block and a corresponding sub-block arising from the partitioning of the already coded and then decoded block have been partitioned again,
▪ an item of digital information is determined if a sub-block arising from the partitioning of the current block and a corresponding sub-block arising from the partitioning of the already coded and then decoded block have not been partitioned again,
▪ an item of digital information is transmitted if a sub-block arising from the partitioning of the current block has been partitioned again and if a corresponding sub-block arising from the partitioning of the coded and then decoded block has not been partitioned again.

5. Coding method according to any one of Claims 1 to 4, in which the coded and then decoded block has a pre-identified position:
- in a decoded part of the current image, or else
- in an already decoded other image, or else
- in an image component associated with another image component in which the current block is situated.

6. Device for coding a current image partitioned previously into blocks, intended to implement the coding method according to any one of Claims 1 to 5, said device comprising, for a current block to be coded,
- partitioning means (MP2) for partitioning the current block at least once into several sub-blocks,
- means (PSB) for representing the partitioning of the current block in the form of a first digital information sequence (Sᵤ),
- means (MPR) for predicting the partitioning of the current block with respect to the partitioning of an already coded and then decoded block represented in the form of a second digital information sequence,
said coding device being **characterized in that** said prediction means are able to inter-compare first and second sequences, the first item of digital information of the first sequence being compared with the first item of digital information of the second sequence, and so on and so forth until the last item of digital information of each of the sequences, or else to inter-compare said corresponding partitionings, and then to determine according to a predetermined comparison criterion:
- a first item of digital information indicating whether a sub-block, arising from the partitioning of said already coded and then decoded block (CTBrⱼ) and corresponding to a sub-block arising from the partitioning of the current block, has been partitioned identically to the sub-block arising from the partitioning of the current block,
- a second item of digital information indicating whether a sub-block, arising from the partitioning of said already coded and then decoded block (CTBrⱼ) and corresponding to a sub-block arising from the partitioning of the current block, has been partitioned again,
no item of digital information moreover being determined if neither a sub-block, arising from the partitioning of said already coded and then decoded block (CTBrⱼ) and corresponding to a sub-block arising from the partitioning of the current block, nor said sub-block arising from the partitioning of the current block, has been partitioned again,
and **in that**
- encoding means (CE) of said coding device encode said first and second items of digital information determined,
- transmission means of the coding device transmit a data signal (F) containing said first and second items of digital information encoded and an item of digital information indicating whether said means for predicting partitioning have or have not been activated.

7. Data signal (F) representative of an image coded according to the coding method according to any one of Claims 1 to 5, **characterized in that** it carries at least one item of encoded digital information.

8. Computer program comprising instructions for the implementation of the coding method according to any one of Claims 1 to 5, when this program is executed by a processor.

9. Method of decoding a data signal (F) representative of a current image previously partitioned into blocks and which has been coded, implementing a step consisting in previously reconstructing the partitioning of a decoded block, said decoding method being **characterized in that** it comprises, for a current block (CTBᵤ) to be decoded, the steps consisting in:
- identifying (D1), in said data signal (F), an item of digital information indicating whether a prediction of the partitioning has been implemented or not on coding, as well as the presence or absence of first and second items of digital information (S'ᵤ) representative of a comparison performed on coding between a first sequence (Sᵤ) of digital information representing the partitioning of a current block and a second sequence (Srᵢ) of digital information representing said partitioning of a decoded block, the first item of digital information of the first sequence having been compared with the first item of digital information of the second sequence, and so on and so forth up to the last item of digital information of each of the sequences, or else between said mutually corresponding partitionings according to a predetermined comparison criterion for which:
- said first item of digital information whose presence is identified indicates whether a sub-block, arising from the partitioning of said already coded and then decoded block (CTBrⱼ) and corresponding to a sub-block arising from the partitioning of the current block, has been partitioned on coding identically to the sub-block arising from the partitioning of the current block,
- said second item of digital information whose presence is identified indicates whether a sub-block, arising from the partitioning of said decoded block and corresponding to a subblock arising from the partitioning of the current block, has been partitioned again on coding,
no item of digital information moreover being identified if neither a sub-block, arising from the partitioning of said already coded and then decoded block (CTBrⱼ) and corresponding to a sub-block arising from the partitioning of the current block nor said sub-block arising from the partitioning of the current block, has been partitioned again on coding,
- reconstructing (D22) the partitioning of the current block on the basis of said reconstructed partitioning of the decoded block and of said first and second items of digital information the presence of which has been identified.

10. Decoding device intended to implement the decoding method according to Claim 9, said device being suitable for the decoding of a data signal (F) representative of a current image previously partitioned into blocks and which has been coded, and comprising reconstruction means (MPRI) able to previously reconstruct the partitioning of a decoded block,
said decoding device being **characterized in that** it comprises, for a current block (CTBᵤ) to be decoded:
- means (MS) for identifying, in said data signal, an item of digital information indicating whether a prediction of the partitioning has been implemented or not on coding, as well as the presence or absence of first and second items of digital information (S'ᵤ) representative of a comparison performed on coding between a first sequence (Sᵤ) of digital information representing the partitioning of a current block and a second sequence (Srᵢ) of digital information representing said partitioning of a decoded block, the first item of digital information of the first sequence having been compared with the first item of digital information of the second sequence, and so on and so forth up to the last item of digital information of each of the sequences, or else inter-compared between said corresponding partitionings according to a predetermined comparison criterion for which:
- said first item of digital information whose presence is identified indicates whether a sub-block, arising from the partitioning of said already coded and then decoded block (CTBrⱼ) and corresponding to a sub-block arising from the partitioning of the current block, has been partitioned on coding identically to the sub-block arising from the partitioning of the current block,
- said second item of digital information whose presence is identified indicates whether a sub-block, arising from the partitioning of said decoded block and corresponding to a sub-block arising from the partitioning of the current block, has been partitioned again on coding,
no item of digital information moreover being identified if neither a sub-block, arising from the partitioning of said already coded and then decoded block (CTBrⱼ) and corresponding to a sub-block arising from the partitioning of the current block nor said sub-block arising from the partitioning of the current block, has been partitioned again on coding,
- said reconstruction means (MPRI) being able to reconstruct the partitioning of the current block on the basis of said reconstructed partitioning of the decoded block and of said first and second items of digital information identified.

11. Computer program comprising instructions for the implementation of the decoding method according to Claim 9, when this program is executed by a processor.

12. Recording medium readable by a computer on which is recorded a computer program comprising instructions for the execution of the steps of the decoding method according to Claim 9, when this program is executed by a processor.
